(19) Europäisches Patentamt
European Patent Office
Office européen des brevets

(11) EP 1 051 254 B1

(12) EUROPÄISCHE PATENTSCHRIFT

(45) Veröffentlichungstag und Bekanntmachung des Hinweises auf die Patenterteilung:
**11.08.2004 Patentblatt 2004/33**

(21) Anmeldenummer: **99903644.5**

(22) Anmeldetag: **19.01.1999**

(51) Int Cl.$^7$: **B01J 31/12**, B01J 37/02, B01J 31/02, B01J 37/06, C08F 4/02, C08F 10/00

(86) Internationale Anmeldenummer:
**PCT/EP1999/000285**

(87) Internationale Veröffentlichungsnummer:
**WO 1999/037398 (29.07.1999 Gazette 1999/30)**

# (54) COREAKTIVE TRÄGERMATERIALIEN ZUR HETEROGENISIERUNG VON KATALYSATOREN, COKATALYSATOREN UND LIGANDEN

COREACTIVE SUPPORTING MATERIALS FOR HETEROGENIZATION OF CATALYSTS, COCATALYSTS AND LIGANDS

MATERIAUX SUPPORTS CO-REACTIFS POUR HETEROGENEISATION DE CATALYSEURS, CO-CATALYSEURS ET LIGANDS

(84) Benannte Vertragsstaaten:
**AT BE CH DE FR GB IE IT LI NL SE**

(30) Priorität: **26.01.1998 DE 19802753**

(43) Veröffentlichungstag der Anmeldung:
**15.11.2000 Patentblatt 2000/46**

(73) Patentinhaber: **MERCK PATENT GmbH**
**64293 Darmstadt (DE)**

(72) Erfinder:
- **POETSCH, Eike**
  **D-64367 Mühltal (DE)**
- **BUCHHOLZ, Herwig**
  **D-60599 Frankfurt am Main (DE)**

(56) Entgegenhaltungen:
**WO-A-95/26818**
**WO-A-95/29755**
**DE-A- 2 801 240**
**US-A- 5 275 994**

EP 1 051 254 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein Verfahren sowohl zur Herstellung von coreaktiven Tragermaterialien als auch der damit hergestellten Heterogenkatalysatoren und Cokatalysatoren. Die erfindungsgemäßen coreaktive Trägermaterialien mit vermehrter Zahl coreaktiver Gruppen ermöglichen die Heterogenisierung von Katalysatoren, Cokatalysatoren und Liganden, welche zur Olefinpolymerisation von Ethylen, Propylen, Hexen, oder Styrol benötigt werden. Sie ermöglichen aber auch die Herstellung von Katalysatoren für Metathese-, Hydrier-, Kopplungs-, Oxidations- oder Hydroformylierungsreaktionen.

Katalytisch beschleunigte Reaktionen stellen für den Chemiker ein Problem dar, wenn der Katalysator nach Abschluß der Reaktion sich nicht in einfacher Weise vom hergestellten Produkt abtrennen läßt. Insbesondere ist dieses häufig der Fall bei der homogenen Katalyse. Vorteilhaft ist daher eine Heterogenisierung homogener Katalysatoren. Letzteres führt nicht nur zu einer Produktverbesserung sondern bringt auch eine Reihe von verfahrenstechnischen Vorteilen. Eine Heterogenisierung kann auf verschiedene Weisen erfolgen, und zwar durch Physisorption oder durch Chemisorption auf einem geeigneten Trager. Da durch die Physisorption keine Bindungen zum eigentlichen Katalysator ausgebildet werden, führt sie im allgemeinen zu einer rascheren Ausbleichung des Katalysators. Chemisorption erfolgt dagegen durch ionische oder koordinative Bindung des Katalysators auf der Oberfläche des Tragermaterials. An organische aber auch organische Träger können auch katalytisch aktive Gruppen über Ligandenbindungen fixiert sein. Solche organischen Trägermaterialien können z. B. Polystyrolderivate sein Nachteile organischer Tragermaterialien sind aber ihre geringe mechanische Belastbarkeit, ihre Quellbarkeit und schlechte Warmeübertragung Nachteile, die anorganische Trägermaterialien im allgemeinen nicht besitzen.

Wichtigstes Prinzip der Herstellung chemisorptiv gebundener Katalysatoren, welche an anorganische Tragermaterialien gebunden sind, ist die Umsetzung eines Trageroxides mit Hydroxylgruppen an der Oberfläche.

Letztere können z. B $SiO_2$, $Al_2O_3$ oder MgO sein. Die Oberflächenhydroxylgruppen werden beispielsweise mit Metallalkylen, -halogeniden oder -alkoholaten oder funktionalisierten Alkoxysilanen, die mit einer Ligandengruppe versehen sind, umgesetzt Solche Umsetzungen sind aus der Literatur bekannt (z. B. aus: J. Hagen, in "Technische Katalyse", VCH Weinheim, 1996, S. 225 - 240; oder: M. Z. Cai et al, Synthetic Comm., 27, 361 (1997). Durch die Chemisorption, welche mit der Ausbildung einer zusätzlichen Bindung verbunden ist, verändern sich jedoch in manchen Fällen die ursprünglich vorteilhaften Eigenschaften des homogenen Katalysators aufgrund der mit der Bindungsbildung verbundenen Änderung der stereoseletiven Situation nachteilig.

Anorganische Tragermaterialien weisen je nach chemischem Aufbau eine mehr oder weniger große Zahl an reaktiven OH-Gruppen an der Oberfläche auf, die eine Bindung mit katalytisch aktiven organischen oder metallorganischen Gruppen bilden können. Diese Zahl beträgt für ein völlig hydroxyliertes Kieselgel etwa 4,4 bis 8,5 pro $nm^2$. (H. P. Boehm, Angew. Chem. 78, 617 (1966). Bestätigt wurden diese Werte durch J. Kratochvila et al, Journal of Non Crystalline Solids 143, 14 - 20 (1992). Bei einem Bindungsabstand von ca. 1,60 Å für die Si-O-Bindung und einem Winkel von 150 für den Si-O-Si-Winkel befinden sich an der Kieselgeloberfläche ca 13 Si-Atome pro $nm^2$ bzw. pro 100 $Å^2$. Das bedeutet, daß in der oberflächigen Monoschicht maximal 13 Si-OH-Gruppen auftreten bei zusätzlicher 3-facher Valenzbindung des Si über die oxidischen Sauerstoffbrucken. In der Regel sind bei Zimmertemperatur getrocknetem Kieselgel aber nur 4 Si-OH-Gruppen zu erwarten (vergl. Boehm und Kratochvila).

Um auf einen Silikatträgermaterial pro Gewichtseinheit eine möglichst große Anzahl aktiver Si-OH-Bindungen zu erzielen, können die Oberflächen des Trägermaterials in Form von Poren, Klüften und/oder durch möglichst kleine Partikeldruchmesser vergrößert werden. Eine Erhöhung der Si-OH-Gruppen durch Sättigung mit Wasser oder Wasserdampf führt zu keiner befriedigenden Lösung. Denn das zusatzlich an der Oberfläche adsorbiete Wasser bewirkt bei den meisten chemisorptiven Belegungen der Oberfläche mit coreaktiven Liganden oder Katalysatoren deren Hydrolyse. Starkes Trocknen wiederum führt gleichzeitig zur Abnahme der Si-OH-Gruppen auf bis unter 2 pro $nm^2$.

Aber nicht nur die Menge adsorbierten Wassers an der Oberfläche solcher Silikatmaterialien beeinflußt die Qualität des damit hergestellten trägerfixierten Katalysatormaterials. Si-OH-Gruppen an der Oberfläche eines Partikels können eine wesentlich andere sterische Umgebung aufweisen als solche, die sich in Klüften und Poren des Partikels befinden. Dieses kann zu unterschiedlich stark katalytischen Zentren und Selektivitätsverlusten führen. Bei regelmäßiger Partikeloberfläche, wie sie bei den Teilchen in kugelförmigen Mikrogelen größtenteils vorliegt, sind solche Unterschiede in wesentlich geringerem Ausmaß zu erwarten.

Die gleichen Probleme spielen natürlich auch eine Rolle, wenn $Al_2O_3$, $TiO_2$ oder $ZrO_2$ als Trägermaterial zur coreaktiven Heterogenisierung homogener Katalysatoren verwendet werden.

Aufgabe der vorliegenden Erfindung war es daher, ein anorganisches Trägermaterial mit einer möglichst hohen Anzahl coreaktiver Gruppen an der Oberfläche zur Verfügung zu stellen, welches eine gute Wärmeleitfähigkeit und möglichst geringe Quellbarkeit aufweist. Aufgabe der Erfindung war es auch, ein in einfacher Weise durchführbares und preiswertes Verfahren zur Erzeugung einer möglichst großen Anzahl coreaktiver OH-Gruppen an der Oberfläche und in den Poren des Trägermaterials zu entwickeln, ohne dabei gleichzeitig eine Belegung mit Wassermolekülen zu verursachen, um unerwünschte Hydrolyse des coreaktiven Liganden, Katalysators oder andern Tägers auszuschließen. Weiterhin war es auch Aufgabe der Erfindung aus den erhaltenen Trägermaterialien Heterogenkatalysatoren und Cokatalysatoren mit hoher Belegung pro Flächen- und Gewichtseinheit herzustellen, welche in ihrer Anwendung eine hohe Produktselektivität aufweisen.

Die Lösung der vorliegenden Aufgabe erfolgt durch ein Verfahren zur Herstellung von Trägermaterialien T mit erhöhter Zahl reaktiver Gruppen, welches dadurch gekennzeichnet ist, daß man ein natürliches oder chemisch hergestelltes sauerstoffhaltiges, anorganisches Gel, Oxid oder Salz des Siliziums, Bors, Aluminiums, Titans, und des Zink als anorganisches Trägermaterial in einem inerten aprotischen polaren oder inerten aprotischen unpolaren Lösungsmittel ausgewählt aus der Gruppe Tetrahydrofuran, Methyl-t.-butylether, Dimethylformamid, N-Methylpyrrolidon, Tetramethylharnstoff, Hexan, Heptan, Cyclohexan, Methylcyclohexan, Toluol und Xylole mit einem stark basisch reagierenden Reagenz reagieren lässt. Letzteres reagiert über einenmit der OH-Gruppe des Hydroxids intermediär gebildeten Komplex unter Auflösung der oxidischen Bindung des Trägers zu einer OH- und einer OM-Gruppe auf dem Träger, wobei M einem Alkali- oder Erdalkaliatomäquivalent entspricht. Aus den durch die Reaktion neu gebildeten OM-Gruppen werden gegebenenfalls durch Ansäuern mit einer organischen oder anorganischen Säure die OH-Gruppen freigesetzt.

Insbesondere erfolgt die Lösung der vorliegenden Aufgabe durch die besondere Ausgestaltung des Verfahrens gemäß der Ansprüche 2 bis 12, sowie durch nach dem Verfahren hergestellte Trägermaterialien, Heterogenkatalysatoren und Heterogencokatalysatoren gemäß der Ansprüche 13 bis 16 und deren Verwendung gemäß der Ansprüche 17 und 18.

Die Lösung der Aufgabe erfolgt ferner durch das Aufbringen chemisorptiv gebundener Liganden, Katalysatoren bzw. Cokatalysatoren zwecks Erzeugung einer funktionellen Oberfläche, durch

a) direkte Reaktion erzeugter OH- oder entsprechender OM-Gruppen mit geeigneten coreaktiven Gruppen des jeweiligen Liganden, Katalysators bzw. Cokatalysators
oder
b) Modifizierung erzeugter OH- oder entsprechender OM-Gruppen der Oberfläche durch chemisorptiv gebundene coreaktive Gruppen, durch die eine Oberfläche, bestehend aus chemisorptiv fixierten funktionellen organischen Liganden entsteht.

Hierbei kann die Variante b) über einen vollkommen anderen Reaktionstyp erfolgen als die Variante a).

Eine wesentliche Verfahrensvariante erzeugt das zur Spaltung des Oxids benötigte Metallhydroxid in situ aus dem auf dem Oxid befindlichen, physisorbierten Wasser. Dadurch wird die Oberfläche gleichzeitig getrocknet. Durch Einstellen des Wassergehaltes auf der Oberfläche läßt sich auch die Zahl der neu gebildeten OH-Gruppen regulieren. Die neu gebildeten OH-Gruppen können z. B. durch Hydrid in ihre Alkali- bzw. Erdalkalisalze übergeführt werden, aus denen in umgekehrter Weise mit organischen oder anorganischen Säuren die aktiven OH-Gruppen wieder freigesetzt werden können.

In dem erfindungsgemäßen Verfahren kann als natürliches oder chemisch hergestelltes, sauerstoffhaltiges, anorganisches Material ein Gel, Oxid oder Salz des Siliziums, Bors, Aluminiums, Titans und des Zirkons verwendet werden.

Bei den siliziumhaltigen Materialien kann es sich um Kieselgel, sauerstoffhaltige Alkylsiloxane oder natürlich vorkommende Silikate, die sich von ketten-, band-, und schichtförmigen Kieselsauren ableiten, handeln.

Die Silikate können erfindungsgemäß Wollastonit, Enstatit, Diopsid, Trennolith, Serpentin oder Talk sein.

Vorzugsweise handelt es sich bei den oxidischen Silizim-, Aluminium-, Titan-, oder Zirkonderivaten um ein Trägermaterial in Form von besonders kleinen Partikeln, sogenannten Nanopartikeln, mit großer Oberfläche (10 bis 1000 nm)

Nach dem erfindungsgemäßen Verfahren kann es sich bei den titanhaltigen Nanopartikeln auch um $BaTiO_3$ handeln.

Gegenstand der Erfindung ist ein Verfahren, welches daduch gekennzeichnet ist, daß inerte aprotische Lösungsmittel ausgewählt werden, die sowohl polar(Tetrahydrofuran, Methyl-t.-butylether, Dimethylformamid, N-Methylpyrrolidon, Tetramethylharnstoff) als auch unpolar (Hexan, Heptan, Cyclohexan, Methylcyclohexan, Toluol, Xylole) sein können.

Im erfindungsgemäßen Verfahren werden bei Vorhandensein von Wasser auf der Oberfläche ein Alkali- oder Erdalkalihydrid, ein Alkali- oder Erdalkalioxid oder polare Metallorganyle der Alkali- oder Erdalkalimetalle verwendet. Befindet sich kein Wasser auf der Oberfläche, werden die oxidischen Bindungen mit Alkali- oder Erdalkahoxiden oder Alkali- oder Erdalkalihydroxiden gespalten und in die Salze aktiver OH-Gruppen übergeführt.

Als basisch reagierendes Reagenz kann ein Hydrid , ausgewählt aus der Gruppe NaH, LiH, KH, $MgH_2$, $CaH_2$ und $BaH_2$, ein Oxid, ausgewahlt aus der Gruppe $Na_2O$, $Li_2O$, $K_2O$, MgO, CaO, und BaO, ein Metallorganyl aus der Gruppe der Kohlenwasserstoffe Li-butyl und Li-methyl, der Alkoholate, ausgewählt aus der Gruppe Na-methylat und K-tert, butylat, oder ein Alkali- oder Erdalkalihydroxid, ausgewählt aus der Gruppe LiOH, NaOH, KOH und $Mg(OH_2)$

sein.

Zum Ansäuern kann erfindungsgemaß eine organische oder anorganische Saure, inbesondere ausgewählt aus der Gruppen der Säuren $CH_3SO_3H$, $CF_3SO_3H$, $H_2SO_4$, HF, HCl, HBr, HJ, und $H_3PO_4$, verwendet werden.

Gegenstand der Erfindung ist ferner ein Verfahren, das dadurch gekennzeichnet ist, daß das Trägermaterial nach der Bildung der OM-Gruppen oder nach Freisetzung der neu gebildeten OH-Gruppen zur Bildung einer neuen coreaktiven Oberfläche mit einem neuen Reaktionspotential mit einem Metallderivat, und zwar einem Metallhalogenid, -organyl oder -hydrid oder mit deren Gemischen, bzw mit deren gemischt funktionellen Derivaten analog der im folgenden gegebenen Gleichungen 5a - 5d und Gleichungen 8a, 8b umgesetzt wird

Zu diesem Zweck wird eine Hydrido- oder Halogenverbindung oder metallorganische Verbindung eines Metalls M' der Gruppen 3A, 3B, 4B, 5B oder 6B des Periodensystems der Elemente oder ein entsprechendes gemischt funtionelles Derivat verwendet, dessen organischer Rest

"Org" die Bedeutungen
A, OA, ACOO, NHA, $NA_2$, SA, A-$NA_2$, A-NHA, AOH, AOA, $(AO)_yAr$, $APA_2$, $APAr_2$,
Cycloalkyl gesättigt oder ungesättigt mit bis zu 6 C-Atomen, heterocyclischer oder aromatischer Rest Ar

mit

A geradkettiger, verzweigter, gesättigter oder ungesättigter Alkylrest mit 1 bis 8 C-Atomen,

und

Ar substituiertes oder unsubstituiertes Phenyl, Naphthyl, Pyridyl, Pyrimidinyl, Thiopenyl, Furanyl, wobei Substituenten A, OA, CO-AOH, COOH, COOA, Cl oder F sein können,

annehmen kann.

Als Metallhalogene oder -hydride kommen Verbindungen in Frage, bei denen ein oder gegebenenfalls mehrere der organischen Reste durch die Halogene F, Cl, Br oder J und/oder durch Wasserstoff ersetzt sein kann.

Gegenstand der Erfindung ist daher auch ein nach dem erfindungsgemäßen Verfahren hergestelltes coreaktives Trägermaterial, das eine neue coreaktive Oberfläche mit einem gegenüber der ursprünglichen Oberfläche veränderten Reaktionspotential besitzt.

Zur Herstellung coreaktiver Oberflächen mit teilweise katalytischen bzw. cokatalytischen Eigenschaften auf einem oxidischen Träger T, bei dem es sich um ein natürliches oder chemisch hergestelltes sauerstoffhaltiges Gel, Oxid oder Salz des Siliziums, Bors, Aluminiums, Titans oder des Zirkons handeln kann, lässt man die durch direkte Reaktion erzeugten OH- oder entsprechenden OM-Gruppen, worin M einem Alkali- oder Erdalkaliatom entspricht, mit coreaktiven Gruppen eines Liganden, Katalysators oder Cokatalysators reagieren.

Ein solches coreaktives Trägermaterial kann ein oxidisches Material sein, dessen Oberflächenstrukturen durch metallorganische Verbindungen der allgemeinen Formeln (IV), bzw. (IVa), (IVb) und (IVc)

$$(T\text{-}O)_m\text{-}M'\text{-}Z_{(p-m)} \qquad (IV)$$

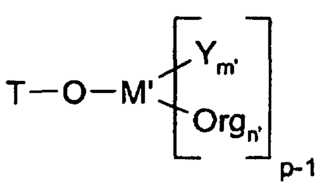

(IVa)

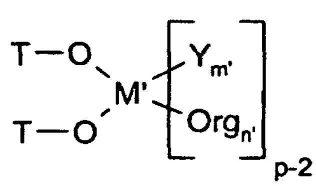

(IVb)

und

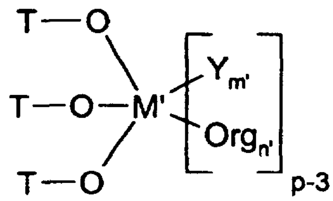

(IVc)

beschreibbar sind, worin

T ein oxidisch gebundenes Element aus der Gruppe Si, B, Al, Ti und Zr, im Kern des Trägermaterials befindlich
M' ein Element ausgewählt aus der Gruppe der Elemente der Gruppen 3A, 3B, 4B, 5B und 6B des Periodensystems der Elemente,
Z Y, Org
Y H, Hal,;
Hal F, Cl Br, J

mit

m' 0 bis (p-x-n') und
n' 0 bis (p-x-m'), wobei p der maximal möglichen Bindungszahl von M' entspricht und x = 1, 2 oder 3;

und

Org A, OA, ACOO, $NA_2$, SA, $ANA_2$, ANHA, AOH, AOA, $(AO)_yAr$, $APA_2$, $APAr_2$, gesättigtes oder ungesättigtes Cycloalkyl mit bis zu 6 C-Atomen, heterocyclischer oder aromatischer Rest Ar, gleich oder verschieden

mit

y 0, 1, 2, 3, 4
A geradkettiger, verzweigter, gesättigter oder ungesättigter Alkylrest mit 1 bis 8 C-Atomen

und

Ar substituiertes oder unsubstituiertes Phenyl, Naphthyl, Pyridyl, Pyrimidinyl, Thiophenyl, Furanyl, wobei die Substituenten A, OA, COOH, COOA, Cl, F sein können,

bedeuten.

Die Verbindungen der allgemeinen Struktur IVa, IVb, IVc, die bereits katalytische bzw cokatalytische Eigenschaften besitzen können, sind transformierbar in analoge Derivate IV, bzw. IVd, IVe und IVf

$$(T\text{-}O)_m\text{-}M'\text{-}Z_{(p-m)} \qquad (IV)$$

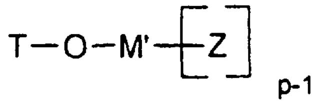

(IVd)

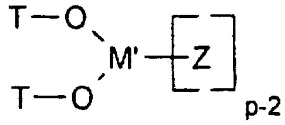

(IVe)

und

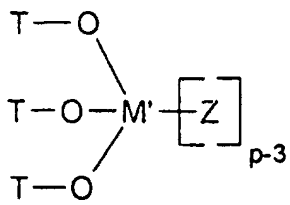

(IVf)

worin

Z Y, Org

bedeutet und

T und M' die oben gegebenen Bedeutungen annehmen können, und zwar durch Umsetzungen mit anionischen Nucleophilen, Wasserstoff substituierten Nucleophilen oder α-olefinisch oder α-acetylenisch substituierten Organylen.

Die vorliegende Erfindung umfaßt daher auch ein Verfahren zur Herstellung coreaktiver Oberflachen mit teilweise katalytischen bzw. cokatalytischen Eigenschaften der allgemeinen Formeln IVa bis IVc ,

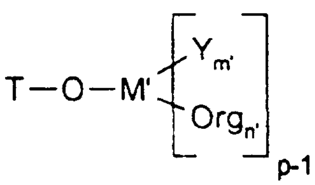

(IVa)

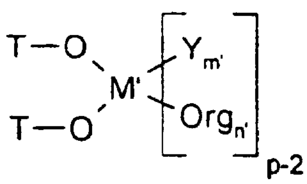

(IVb)

und

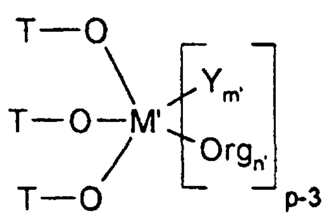

(IVc)

bzw. der allgemeinen Formeln IVd bis IVf,

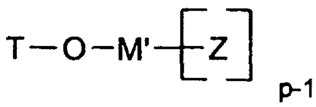

(IVd)

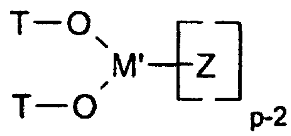

(IVe)

und

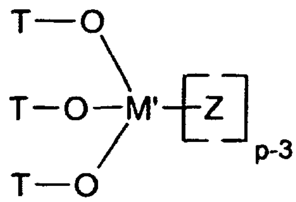

(IVf)

durch Umsetzung von auf dem oxidischen Träger T befindlichen, bzw. hergestellten O-M Gruppen mit Metallderivaten aus der Gruppe der Metallhydride, -organyle, -halogenide einschließlich ihrer gemischt funktionellen Derivate der allgemeinen Formel $M'(Z)_p$, mit der Maßgabe, daß die Metallderivate mindestens eine Fluchtgruppe Y = Halogen oder Org = Alkoxy, Acyloxy oder Organylsulfonat enthalten.

In besonderer Ausgestaltung erfolgt das erfindungsgemäße Verfahren zur Herstellung von coreaktiven Oberflächen mit teilweise katalytischen, bzw. cokatalytischen Eigenschaften der allgemeinen Formel IVa bis IVc, bzw. IVd bis IVf, $(T\text{-}O)_m\ M'\text{-}Z_{(p-m)}$ (IV) mit m = 1, 2 oder 3 durch Umsetzung von Trägermaterialien mit freigesetzen OH-Gruppen mittels Metallderivaten aus der Gruppe der Metallhydride, -organyle, -halogeniden und deren gemischt funktionellen -derivate der allgemeinen Formel

$$M'(Z)_p ,$$

die mindestens einen Hydrid- (Y = H) oder einen Organylrest (Org) besitzen.

Insbesondere kann der oben angesprochene Austausch mit anionischen Nucleophilen nach folgendem Reaktionsschema erfolgen:

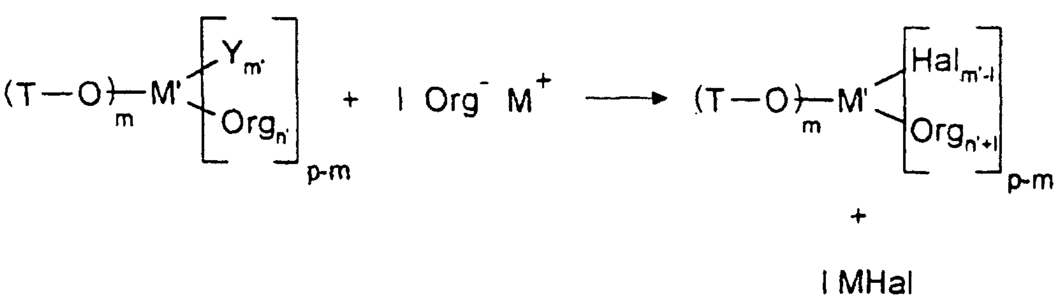

mit $l \leq m'$.

Anstelle von Hal können auch über O oder N gebundene A- oder Ar-Reste mit anionischen Nucleophilen ausgetauscht werden.

Auf diese Weise wird einerseits die Gruppe geträgerter Funktionssysteme erweitert (Gleichungen 5e bis 5g), andererseits werden aber auch andere Katalysatorsysteme oder Ligandensysteme erhalten, welche sowohl ähnliche als auch gänzlich andere Eigenschaften aufweisen, je nach Art des verwendeten Nucleophils oder Olefins.
Mit Wasserstoff substituierte Nucleophile der allgemeinen Formel

$$H—Nu$$

können solche sein, in denen

Nu A, OA, $ACO_2$, NHA, $NA_2$, SA, $ONA_2$, ONHA, O-A-OH, O-A-O-A, (O)m-Ar, $(HN)_m$-Ar, $(NA)_m$-Ar (m=1,2), NH-A-OA, NH-A-NHA, NH-A-$NA_2$, NH-A-$NH_2$, A-N-A-$NA_2$, HN-A-$NA_2$, O-A-$P(R)_2$, RN-A-$P(R)_2$, S-A-$P(R)_2$, $R_2P-(CH_2)_j-[C(O)H]_k-C(O)H-(CH_2)_jP(R)_2$, $R_2N-(CH_2)_j-[C(O)H]_k-C(O)H-(CH_2)_j-N(R)_2$, OH,

mit

R A, O-A, Aryl, OAryl, H
j 1, 2 oder 3 und
k 0 oder 1,

wobei A und Aryl die oben gegebenen Bedeutungen haben

Der Austausch mit wasserstoffhaltigen Nucleophilen kann nach folgendem Reaktionsschema erfolgen:

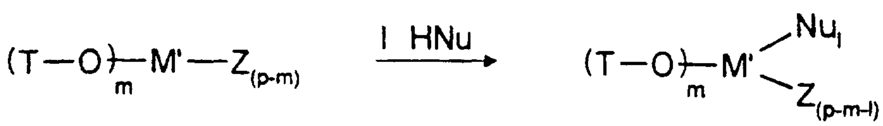


(IV) (V)

mit $l \leq (p - m)$.

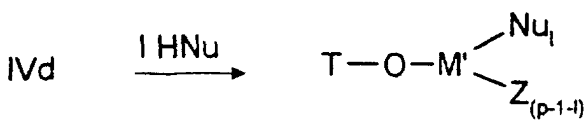


(5e)

(Va)

mit l = 1 - 3

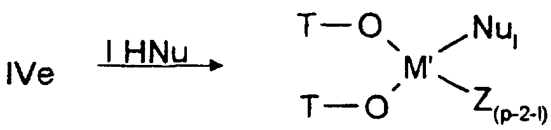


(5f)

(Vb)

mit l = 1 - 2

und

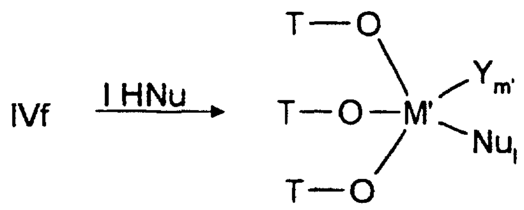


(5g)

(Vc)

mit l = 1

In entsprechender Weise kann eine Umsetzung mit α-olefinischen, bzw. α-acetylenischen Organylen erfolgen:

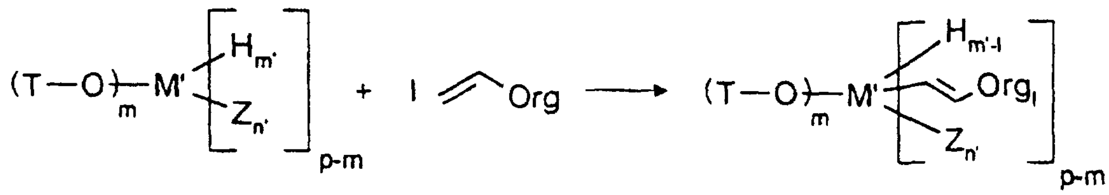

mit l ≤ m'.

Diese Reaktion stellt für einige Polymerisationen auch den ersten Schritt dar.

Zur Durchführung der Transformationen können durchaus verschiedene M' mit unterschiedlicher Substitution auf ein und demselben Träger aufgebracht sein und getrennt oder gemeinsam zur Reaktion gebracht werden.

Ferner ist Gegenstand der Erfindung die Verwendung eines nach dem erfindungsgemäßen Verfahren hergestellten coreaktiven Trägermaterials zur Tragerung von Katalysatoren bzw. seine direkte Verwendung für die zur Olefinpolymerisation von Ethylen, Propylen, Hexen, oder Styrol, oder zur Verwendung oder Herstellung von Katalysatoren für Metathese-, Hydrier-, Kopplungs-, Oxidations- oder Hydroformylierungsreaktionen.

Überraschenderweise wurde gefunden, daß sich die Zahl der aktiven OH-Gruppen an der Oberfläche von sauerstoffhaltigen, anorganischen Trägermaterialien in einfacher Weise durch Behandeln mit Natriumhydrid stark erhohen läßt. Und zwar kann dieses Ziel erreicht werden, indem man ein geeignetes wasserhaltiges Tragermaterial in einem inerten, aprotischen Lösungsmittel, wie z. B. Tetrahydrofuran mit Alkali- oder Erdalkalihydrid, wie z. B. NaH, versetzt und reagieren läßt.

Durch Reaktion mit dem dem Tragermaterial anhaftenden Wasser werden unter Freisetzung von Wasserstoffgas auf dem Tragermaterial OH- und OM-Gruppen gebildet, wobei M einem Alkali- oder Erdalkaliatom entspricht. Verallgemeinert läßt sich diese Bildung von reaktiven Gruppen beispielsweise auf Kieselgel durch die folgenden Reaktionsgleichungen beschreiben:

$$a\,H_2O \;+\; M(H)_a \;\longrightarrow\; M(OH)_a \;+\; a\,H_2 \qquad (1)$$

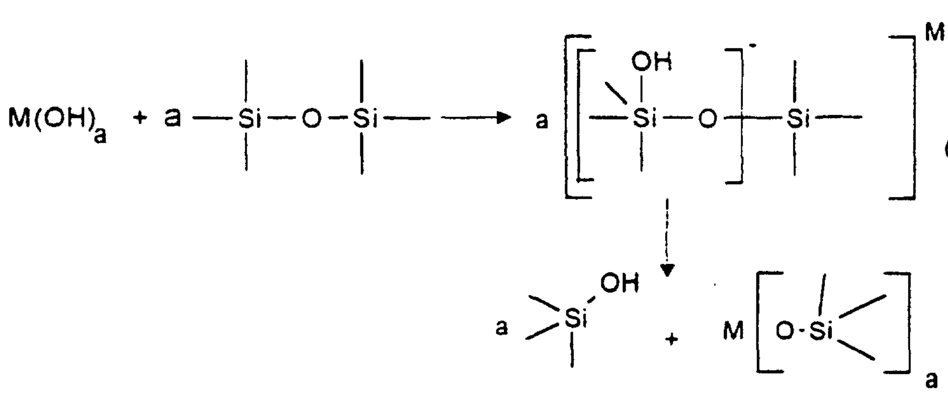

(2)

a entspricht der Wertigkeit des Metallatoms

Zur Durchführung des Verfahrens wird das Hydrid in einem getrockneten inerten aprotischen polaren Losungsmittel aufgenommen und das sauerstoffhaltige, anorganische Tragermaterial, welches eine große Oberfläche aufweisen sollte, in diesem Gemisch suspendiert. Die Reaktion erfolgt bereits bei Temperaturen von etwa 10 °C, kann aber auch bei leicht erhöhter Temperatur von etwa 50 °C durchgeführt werden. Vorzugsweise wird jedoch bei Raumtemperatur gearbeitet

Zur Derivatisierung geeignete sauerstoffhaltige, anorganische Trägermaterialien weisen Partikeldurchmesser von 10 bis 10 000 nm auf, vorzugsweise werden Materialien mit Partikeldurchmessern von 100 bis 5000 nm verwendet. Besonders gute Ergebnisse werden mit Trägermaterialien erzielt, die eine möglichst gleichmaßige Oberfläche besitzen von 1 bis 600 $m^2/g$ Trägermaterial, aufweisen

Die gebildeten Si-OH- Gruppen können mit zusätzlichem Hydrid zu weiteren Si-OM-Gruppen reagieren:

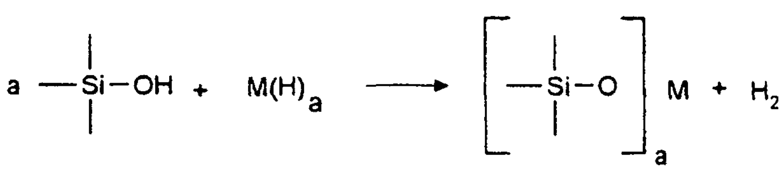

(3)

Durch Ansäuern können die gebildeten Si-OM- in aktive Si-OH-Gruppen umgewandelt werden

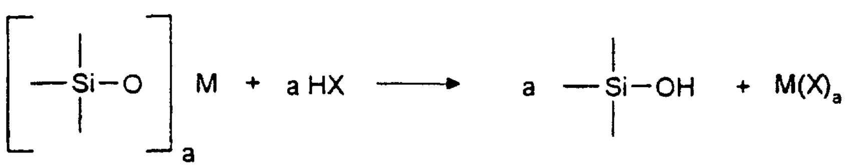

(4)

Zum Ansäuern können organische oder anorganische Säuren verwendet werden. Insbesondere sind Säuren aus der Gruppe $CH_3SO_3H$, $CF_3SO_3H$, $H_2SO_4$, HF, HCl, HBr, HJ, und $H_3PO_4$ geeignet.

Die gemäß der Gleichungen (2) und (3) gebildeten Si-OM-Gruppen konnen als solche mit den Halogeniden der Elemente der Gruppen 3A, 3B, 4B, 5B und 6B des Penodensystems der Elemente M'-$(Hal)_p$ mit den Organohalogenverbindungen der entsprechenden Elemente M'$(Org\ Hal)_p$, oder mit den Organohydrochloriden M'$(Org\ H\ Hal)_p$ reagieren (z.B.):

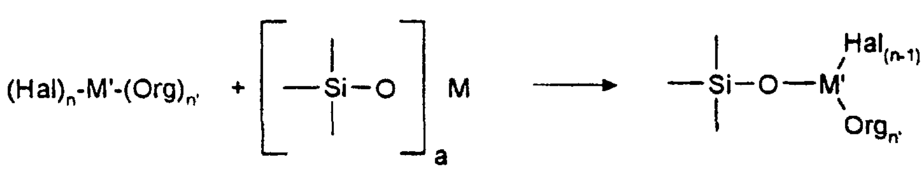

(5a)

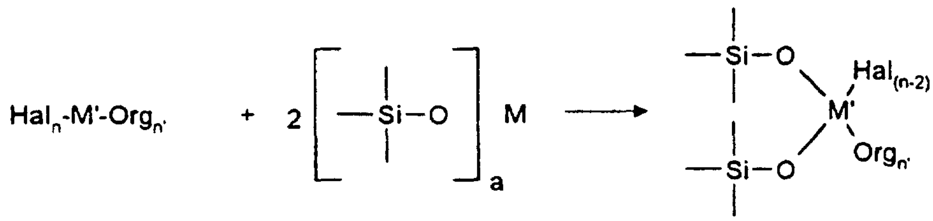

(5b)

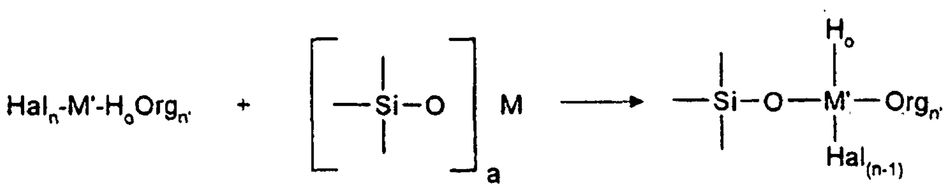

(5c)

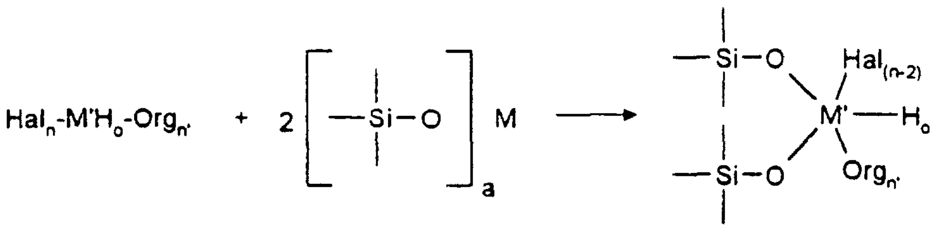

(5d)

Bindungszahl von M' entspricht p = n + n' + o
n = 1 bis p; n' = 0 bis p - 1; o = 0 bis p - n - n'

Die durch die Gleichungen 1 - 3 wiedergegebenen Reaktionen lassen sich mit Hydriden der Alkalimetalle, ausgewählt aus der Gruppe NaH, LiH, KH und CsH, und mit Hydriden der Erdalkalimetalle, ausgewählt aus der Gruppe $MgH_2$, $CaH_2$ und $BaH_2$, durchführen, so daß M in den co-reaktiven Gruppen die Bedeutungen Na, Li, K, Cs, Mg, Ca oder Ba annehmen kann:

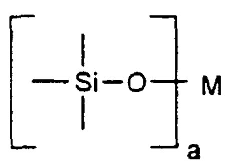

(I)

Anstelle der beispielhaft genannten globularen Kieselgele oder Alkylsiloxane, welche durch Sol-Gel-Prozesse aus Alkoxysilanen hergestellt werden können, können auch aspärische Kieselgele und andere bekannte, natürlich vorkommende Silikate, die sich von ketten-, band- und schichtförmigen Kieselsäuren ableiten, analog den durch die Gleichungen 4, 5a und 5b wiedergegebenen Reaktionen umgesetzt werden.

Geeignete Silikate sind Ketten- und Bandsilikate, wie z. B. β-Wollastonit ($CaSiO_3$), Enstatit ($MgSiO_3$) oder Diopsid ($CaMg(SiO_3)_2$, aber auch Amphibole, wie z. B. Trennolith [$Ca_2Mg_5(OH)_2Si_4O_{11})_2$], und Schichtsilikate, wie Serpentin [$Mg_3(OH)_4(Si_2O_5)$] und Talk [$Mg_3(OH)_2(Si_2O_5)_2$]. Die OH-Gruppen dieser Minerale können gemäß Gleichung (3) mit einem Alkali- oder Erdalkalihydrid umgesetzt werden

Durch Versuche wurde weiterhin gefunden, daß sich die Bildung coreaktiver Gruppen auf dem Trägermaterial auch unter Verwendung der entsprechenden polaren Metallorganyle (M-Org, worin M die oben gegebenen Bedeutungen haben kann) erzielen läßt. Wesentlich einfacher lassen sie sich aber durch die Verwendung der entsprechenden Alkali- und Erdalkalioxyde erhalten. Beispielhaft ist die dann ablaufende Reaktionsfolge bei Verwendung von $Na_2O$ dargestellt:

$$H_2O + Na_2O \rightarrow 2\ NaOH \qquad (6a)$$

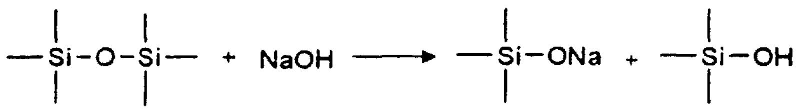
(6b)

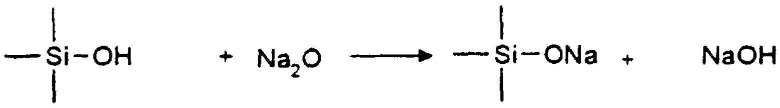
(6c)

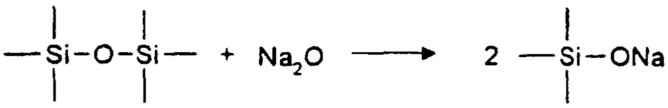
(6d)

Die Bildung von Natriumhydroxid gemäß der Reaktionsgleichung 6a erfolgt schneller als die Reaktion des Natriumoxids gemäß der Reaktionsgleichung 6d.

Die auf die beschriebene Weise neu gebildeten coreaktiven Gruppen der Trägermaterialien, lassen sich unabhängig vom Charakter des Alkali- oder Erdalkalikations mit Säuren analog Gleichung (4) in die entsprechenden Hydroxylgruppen überführen. An der Oberfläche der oben genannten Silikatmaterialien läßt sich z. B. auf diese Weise die Zahl der Si-OH-Gruppen erhöhen. Die so modifizierten Tragermaterialien sind jedoch nicht dauerhaft stabil. Unter Freisetzung von Wasser werden allmählich wieder Sauerstoffbrücken nach der folgenden Gleichung ausgebildet:

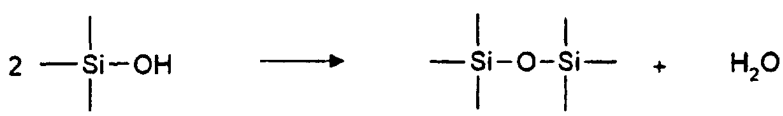
(7)

Um dieses zu vermeiden, müssen die vorbehandelten Trägermaterialien möglichst rasch mit geeigneten metallorganischen Verbindungen umgesetzt werden. Vorzugsweise werden zu dieser Derivatisierung Metallorganyle oder Hydridometallorganyle der Gruppen 3A, 3B, 4B, 5B und 6B des Periodensystems der Elemente verwendet. Im folgenden werden die Metallatome dieser Metallorganyle mit M' bezeichnet. Der Hydridrest regariert rascher mit der OH-Gruppen als der Organylrest.

Bei den organischen Resten handelt es sich vorzugsweise um Katalyse/Cokatalyse fördernde organische Reste. Insbesondere sind dieses geradkettige oder verzweigte, gesättigte oder ungesättigte Alkylreste mit 1 bis 8 C-Atomen sowie davon abgeleitete Alkoxy- oder Acyloxy-Gruppen, und gesättigte oder ungesättigte cyclische, heterocyclische oder aromatische Reste. Da zur Derivatisierung auch Halogenide, Hydnde oder Hydrohalogenide der entsprechenden Metallorganyle eingesetzt werden können, können folglich nach der Derivatisierung auch der Hydridrest und oder Halogenreste, ausgewählt aus der Gruppe Cl, F, Br und J über M' an den Träger gebunden sein.

Verallgemeinert kann die Derivatisierung des vorbehandelten Trägermaterials, wie im oben beschriebenen Fall des vorbehandelten Kieselgels, durch geeignete Metallorganyle der allgemeinen Bezeichnung $M'(H\ Org\ Hal)_p$ in Analogie zu den Gleichungen 5a bis 5d gemäß der Gleichungen 5e bis 5g und für Si-Träger gemäß der folgenden Reaktionsgleichungen dargestellt werden:

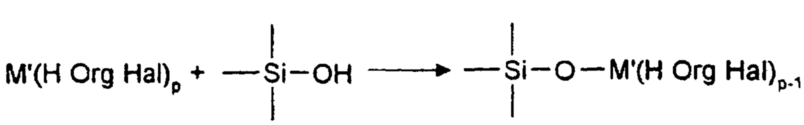
(8a)

oder

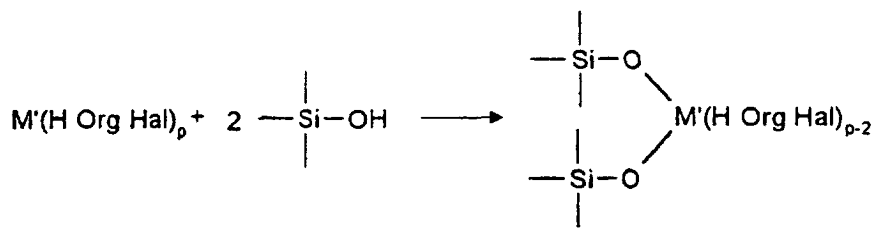

Für den Fall, daß M' Silizium bedeutet, ist es in bekannter Weise möglich, durch die Wahl geeigneter Edukte trägerfixierte Katalysatoren herzustellen, ohne den organischen Rest wieder abspalten zu müssen, um ihn durch die eigentliche reaktive Gruppe zu ersetzen.

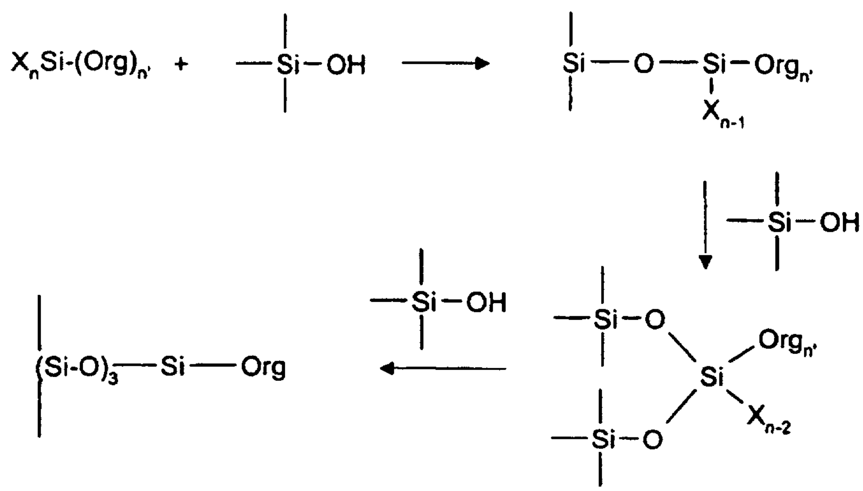

mit X H, Hal, Alkoxy, Acyloxy

Die auf diese Weise hergestellten trägerfixierten erfindungsgemäßen Katalysatoren weisen im Vergleich zu bisher bekannten Katalysatoren dieser Art eine wesentlich höhere Anzahl reaktiver Gruppen an der Oberfläche auf. Dadurch besitzen diese erfindungsgemäßen Katalysatoren erheblich höhere Aktivitäten als bisher verfügbare und im Handel erhältliche trägerfixierte Katalysatoren.

Erfindungsgemäß können auch andere Trägermaterialien in der beschriebenen Weise behandelt werden und deren Anzahl coreaktiver Gruppen erhöht werden. Es können in völlig analoger Weise zu den beschriebenen Silicathaltigen Trägermaterialien die Gele, Oxide und Salze des Bors, Aluminiums, des Titans und des Zirkons behandelt werden. Besonders gute Eigenschaften werden erzielt, wenn entsprechende Nanopartikel auf die erfindungsgemäße Weise behandelt werden, wie z. B. Nanopartikel des $BaTiO_3$, die u. a. durch Mikroemulsionsverfahren erhältlich sind (vergl. H. Herrig, R. Hempelmann, Materials Letters 27, 287 (1996).

Allgemein lassen sich die erhaltenen coreaktiven Trägermaterialien, bzw. Heterogenkatalysatoren und Heterogencokatalysatoren mit den durch metallorganische Verbindungen derivatisierten Oberflächenstrukturen durch die folgende allgemeinen Formeln (IV) und (V) beschreiben:

$$(T—O)_m—M'\text{-}Z_{(p-m)} \qquad (IV)$$

$$(T—O)_m—M'(Nu_l)(Z)_{(p-m-l)} \qquad (V)$$

worin

T ein oxidisch gebundenes Element aus der Gruppe Si, B, Al, Ti und Zr,

M' ein Element ausgewählt aus der Gruppe der Elemente der Gruppen 3A, 3B, 4B, 5B und 6B des Periodensystems der Elemente,

Z und Nu die oben gegebenen Bedeutungen haben

und
$\Sigma m + l$ der Bindungszahl p von M' entspricht,
wobei

l $\leq m$
m 1, 2 oder 3 und
p Bindungszahl von M'

M' kann, wie in Gleichungen (8b) und (9) gezeigt, über weitere Sauerstoffatome zu mehreren Atomen T des Trägermaterials Bindungen ausbilden.

Aus den durch Behandlung mit Hydriden oder Oxiden der Alkali- oder Erdalkalimetalle erhaltenen Trägermaterialien mit erhöhter Zahl an coreaktiven Gruppen der allgemeinen Formel (IIIa)

$$T—O—M, \qquad (IIIa)$$

worin

T ein oxidisch gebundenes Element aus der Gruppe Si, B, Al, Ti und Zr,

und

M Na, Li, K, Cs, Mg, Ca, oder Ba

bedeuten, können in einfacher Weise geträgerte Katalysatoren und Cokatalysatoren hergestellt werden.

Diese Katalysatoren eignen sich für die Olefinpolymerisation von Monoolefinen, wie z. B. Ethylen, Propylen, Hexen und Styrol. Aufgrund der erfindungsgemäßen Herstellung weisen diese Katalysatoren wesentlich höhere Aktivitäten als herkömmliche trägerfixierte Polymerisationskatalysatoren auf. Gleiches gilt auch für Katalysatoren für die Polymerisation von Dienen, wie z. B. Butadien.

In gleicher Weise lassen sich durch die beschriebene Vorbehandlung der Tragermaterialien verbesserte Katalysatoren für

A Metathesereaktionen, beispielsweise mit W, Mo oder Ru als Zentralatom , auch vom ROMP-Typ
B Hydrierreaktionen mit Rh oder Co als Zentralatomen
C Kopplungsreaktionen
D Oxidationsreaktionen
und
E Hydroformylierungsreaktionen, gegebenenfalls mit chiraler Induktion

herstellen.

Vorteilhafterweise werden also nach dem erfindungsgemäßen Verfahren unter Verwendung von metallorganischen Verbindungen der allgemeinen Formel (VI)

$$(Y)_n—M'—(Org)_{n'}, \qquad (VIa)$$

$$(Y)_n—M'—(Org)_n \qquad (VIb)$$

worin Y, M' und Org, die oben gegebenen Bedeutungen haben, und n=1 bis p, n' = 0 bis p-1 bedeuten, Katalysatoren, Cokatalysatoren oder mit Liganden belegte heterogene Träger mit maximal möglicher bzw. optimal gesteuert dichter Belegung der Oberfläche erhalten. Es lassen sich auf diese Weise gemäß der oben gegebenen Reaktionsgleichungen neue trägergebundene Katalysatoren erhalten, die im Vergleich zu herkömmlichen über eine höhere Anzahl von co-reaktiven OH-Gruppen herstellbar sind und daher erhöhte Aktivitäten aufweisen, gleichzeitig aber auch sehr hohe Produktselektivitäten besitzen.

Durch den Aufbau einer neuen coreaktiven Zwischenschicht mit veränderter Reaktivität über die vorhandenen OH-Gruppen lassen sich auf einfache Weise funktionale Substituenten einführen, die die Möglichkeit zur Synthese funktionaler heterogenisierter Materialien der allgemeinen Struktur IV erhöht.

Die folgenden Beispiele sollen die Erfindung naher erläutern. Sie sind jedoch nicht geeignet, den Gegenstand der Erfindung allein auf diese Beispiele beschranken

**Beispiele**

**Beispiel 1**

Erzeugung von Si-ONa-Gruppen (gemäß Gl. 1-3)

30 g einer Wasserbehandlung und anschließender Trocknung unterworfene Kieselgelkügelchen (Monospheres - Merck KGaA, Darmstadt) von einem Durchmesser von 500 nm, einer Dichte 2,0, einer berechneten Oberfläche von 6 $m^2/g$, enthaltend Si-OH-Gruppen und Wasser werden mit 746 mg NaH (3,11 x $10^{-2}$ Mol) in 100 ml Tetrahydrofuran bei 30 °C versetzt. Dabei tritt Wasserstoffentwicklung auf. Aus diesem Wasserstoffvolumen und der zur Kontrolle des unumgesetzten NaH mit Trifluorsulfonsäure freigesetzten Wasserstoffs ergab sich eine Gesamtmenge von 49 OH-Gruppen pro $nm^2$ (4,9 x $10^{-4}$ Mol OH-Gruppen pro Gramm Kieselgel). Dieser hohe Wert wird dadurch erklärbar, daß Wasser auch in Poren oder Klüften reagiert hat.

Entsprechend diesem Vorversuch werden 30 g der o. g. Kieselkügelchen in 100 ml Tetrahydrofuran mit der berechneten Menge an NaH (353 mg = 1,47 x $10^{-2}$ Mol) zu einem Kieselgel mit 49 Si-ONa-Gruppen pro $nm^2$ umgesetzt, das nachstehend der Einfachheit halber als "$SiO_2$-$(ONa)_{49}$" bezeichnet wird (Eine entsprechende Nomenklatur wird auch für dieses oder andere Trägermaterialien unter Angaben der Art und Anzahl der getragerten Gruppen pro $nm^2$ benutzt werden). Die Kugelchen werden abfiltriert und im Vakuum getrocknet. Das Tetrahydrofuranfiltrat reagiert neutral.

Analog bilden sich bei den Umsetzungen mit LiH, KH, $MgH_2$, $CaH_2$, die entsprechenden Alkali- bzw. Erdalkaliderivate. Dabei werden im Falle der Erdalkalihydride je nach Wahl der stochiometrisch berechneten Hydridmenge, wie für das $CaH_2$ nachstehend angegeben, mehr oder weniger ausschließlich die Derivate $SiO_2$-$(OCaH)_{49}$ und

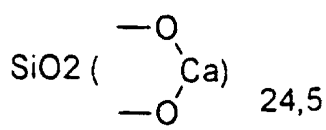

gebildet.

Anstelle des beschriebenen Kieselgels können auch andere Träger, z. B. poröses Kieselgel (Merck, Art Nr. 1.07734.9025), $Al_2O_3$ (neutral, Aktivitätsstufe 1, Merck Art. Nr. 1.01077.2000), $TiO_2$, und Zirkonoxyd in Gegenwart unterschiedlicher Anzahl von OH-Gruppen und Wassermolekülen pro $nm^2$ umgesetzt werden.

**Beispiel 2**

Umwandlung der Si-ONa-Gruppen in Si-OH-Gruppen (Gl. 4)

Substitution der SiOH-Gruppen (Gl. 8a-d)

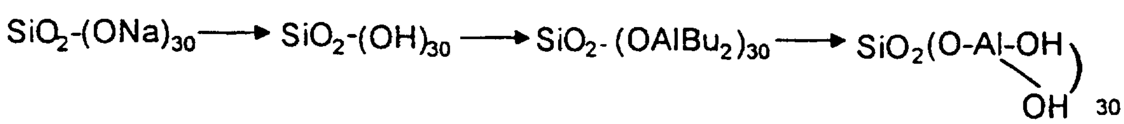

50 g Kieseigelkügelchen (Monospheres 500, Merck KGaA) von 500 nm Durchmesser mit 30 Si-ONa-Gruppen pro nm2 ($SiO_2$-$ONa_{30}$) werden in 100 ml Tetrahydrofuran mit 1,39 ml (15,8 mMol) $CF_3SO_3H$ zu $SiO_2$-$(OH)_{30}$ umgesetzt.
Nach dem Abfiltrieren unter Stickstoff (Druck-Seitzfilter) und Waschen mit Tetrahydrofuran werden die erhaltenen Kügelchen in 100 ml Tetrahydrofuran dispergiert und mit 15 m Mol Diisobutylaluminiumydrid (12,5 ml einer 1,2 molaren Lösung in Toluol) unter Wasserstoffabspaltung und Bildung von $SiO_2$-$(OAl(iBu)_2)_{30}$ umgesetzt.

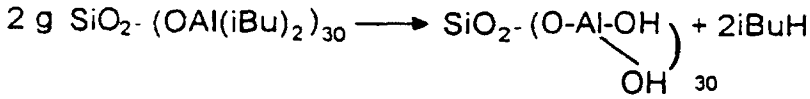

Das

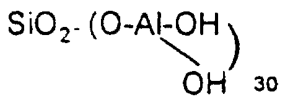

wird abfiltriert und steht weiteren Umsetzungen zur Verfügung
Die Reaktionsprodukte können beispielsweise mit Alkali-, Erdalkalihydriden, Organoelementhydriden oder Alkoxysilanen umgesetzt werden.

Analog erhalt man durch Ansäuern weiterer entsprechender Si-(Oalk) bzw. Si-(O-erdalk-) Verbindungen die Si-(OH) Verbindungen. Diese werden in analoger Weise mit Hydriden, Organylen bzw. Hydndoorganylen des Mg, B, Al, Si, Ti, Zr, Zn und der Lanthaniden zur Umsetzung gebracht. Auch die parallele oder hintereinander ablaufende Umsetzung verschiedener der o. g. Metallorganyle oder -hydride ist auf die angegebene Weise moglich. Die Reaktion gelingt auch mit sauerstoffhaltigem Metallorganylen, wie z. B. Methylaluminoxan (MAO) oder Alkoxytitanaten z. B

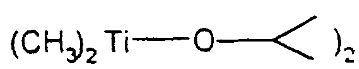

**Beispiel 3**

Darstellung von SiOH- und Si-ONa-Oberflächengruppen mittels $Na_2O$ (Gl. 6)

Kieselkügelchen (Monosphere 500, Merck KGaA) mit 500 nm Durchmesser, 4 Si-OH-Gruppen und 2 Molekülen Wasser pro $nm^2$ werden mit 6 Molekulen $Na_2O/nm^2$ (gepulvert) analog Beispiel 1 in Tetrahydrofuran 4 Stunden bei 60 C unter Rühren umgesetzt. Gemäß den Gleichungen 6 wird ein Produkt gebildet, das acht SiONa und acht Si-OH-Gruppen pro nm2 Oberfläche enthält. Dieses kann gemäß Beispiel 1 zu einem Produkt umgewandelt werden, das 16 Si-ONa oder acht Si-ONa plus acht Si-OH-Gruppen bzw. andere O-alk oder O-erdalk-Gruppen enthält.
Durch Ansäuern mit einer Saure gemäß Gleichung 4 (Beispiel 2) lassen sich die acht Si-ONa-Gruppen in acht Si-OH-Gruppen pro $nm^2$ transferieren, so daß ein Produkt mit 16 Si-OH-Gruppen pro $nm^2$ erhalten wird.

**Beispiel 4**

Erzeugung von

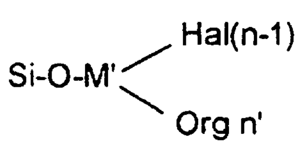

Gl. 5a und 5b

5 g "$SiO_2$-$(ONa)_{49}$" aus Beispiel 1 werden mit 0,279g (2,09 x $10^{-3}$ Mol) $AlCl_3$ in 25 ml Heptan 1,5 Stunden am

Rückfluß unter Stickstoffatmosphare erwärmt, darauf werden 0,102 g (3,49 x 10-4 Mol) Zirkonocendichlorid ($Cp_2ZrCl_2$) zugegeben und eine weitere Stunde am Rückfluß erwärmt. Nach dem Erhalten wird unter Stickstoff mittels einer Seitz-Filtrierapparatur filtriert. Das erhaltene Produkt, dessen Kugelform erhalten geblieben ist, entspricht einem "$SiO_2$-(O-$AlCl_2$)$_{42}$-(O-Zr-$Cp_2Cl$)$_7$", d. h. es enthält formal 42 $OAlCl_2$ und 7 O-$ZrCp_2Cl$-Gruppen pro $nm^2$ Oberfläche. Anlog erhält man durch Umsetzung von 5 g $SiO_2$-(ONa)$_{49}$ mit 0,14 g $AlCl_3$ und 0,102 g Zirkonocendichlorid ein Produkt, das formal einem

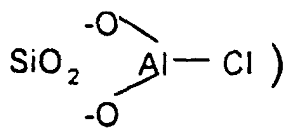

(O-Zr-$Cp_2Cl$)$_7$ entspricht

Anstelle von $AlCl_3$ lassen sich auch $BCl_3$, $BF_3$, $BF_3$ x Etherat, $TiCl_4$, $ZrCl_4$, $VCl_5$, $VCl_4$, $CrCl_3$, Chloride des Molybdans und Wolframs und entsprechende Organoelementhalogenide wie z. B. $(CH_3)_2$ AlCl, $CH_3$-$AlCl_2$, $Cp_2TiCl_2$, $(CH_3)_2TiCl_2$ und in der Polymerisation von $\alpha$-Olefinen bewährte Zirkonocenderivate umsetzen.

**Beispiel 5**

Erzeugung von

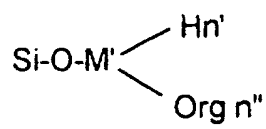

aus Si-ONa mittels

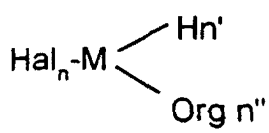

mit n + n' + n'' = p

(Gl. 5a und 5b)

5 g $SiO_2$-(ONa)$_{49}$ werden, wie im Beispiel 4 beschrieben, zunächst mit Al-$Cl_3$ und dann mit 90 mg (3,49 x $10^{-4}$ Mol) Zirkonocenhydrochlorid umgesetzt. Beim Einsatz von 279 mg $AlCl_3$ resultiert ein "$SiO_2$-($OAlCl_2$)$_{42}$-(O-$ZrCp_2H$)$_7$".

**Beispiel 6**

Einführung organischer Liganden

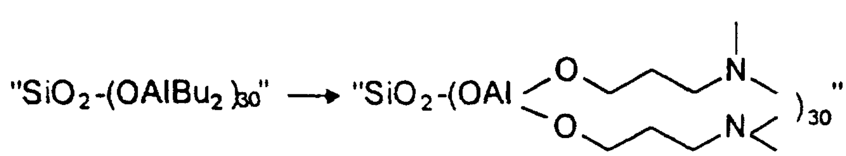

8 g "$SiO_2$-($OAlBu_2$)$_{30}$" werden 16 Stunden bei 25 C in 30 ml Tetrahydrofuran mit 494 mg 3-N-Dimethylaminopropanol gerührt. Es wird unter Stickstoff filtriert und mit Tetrahydrofuran gewaschen. Man erhält:

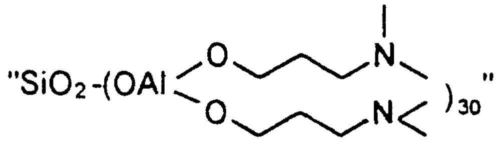

Analog gelingt die Umsetzung mit Bis-1,3-dimethylaminopropanol-(2) und Dimethylaminoethanol. Anstelle der Aminoderivate der Alkohole lassen sich auch die entsprechenden Phosphinoderivate umsetzen, wobei der Phosphor nicht nur mit Methylgruppen sondern auch mit Cyclohexyl- oder Phenylgruppen substituiert sein kann.

Die Umsetzung der geträgerten -O-$AlBu_2$-Gruppen können in analoger Weise auf Aluminium oder porösem Kieselgel als Träger durchgeführt werden.

**Beispiel 7**

Einführung organischer Liganden, Überführung in einen Übergangsmetallkomplex

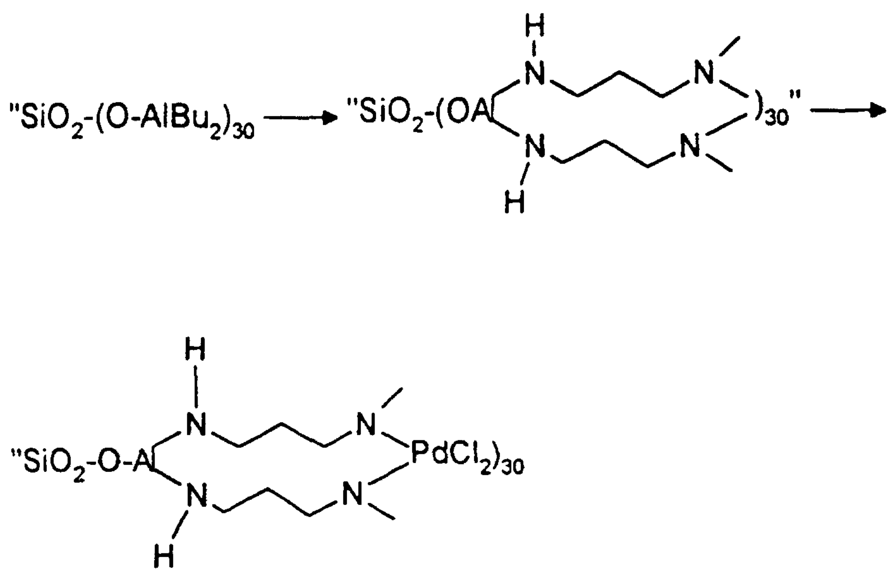

Wie unter Beispiel 6 beschrieben, werden 10 g "$SiO_2$-(O-$AlBu_2$)$_{30}$ mit 612 mg (6 x $10^{-3}$ Mol) 3-N-Dimethylaminopropylamin-(1) in 30 ml Tetrahydrofuran bei 25 C 16 Stunden gerührt. Darauf werden 3 mMol (532 mg) $PdCl_2$ direkt hinzugeben, 3 Tage wird weiter gerührt.

Analog werden 6 g

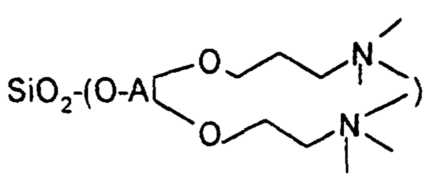

aus Beispiel 6 mit 318 mg (1,794 mMol) $PdCl_2$ in 20 ml Acetonitril drei Tage gerührt, um den entsprechenden Pd II-Komplex zu erhalten In analoger Weise lassen sich auch entsprechende Phoshinkomplexe des Platins, Rhodiums und Rutheniums und Nickels darstellen.

**Beispiel 8**

Ethylenpolymerisation

Zu 0,5 g

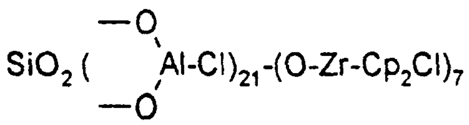

(entsprechend 3 mg = 3,3 x $10^{-5}$ Mol Zirkon) werden 10 ml 30 % Methylaluminoxan (MAO) in 50 ml Toluol gegeben. Die Suspension wird ca 30 Minuten gerührt. Daraufhin wurde bei 25 C unter 5 bar Ethylen 5 Minuten im Druckschlenkrohr polymerisiert.

Es wurden 9,35 g Polyethylen erhalten. Es trat kein "fouling", d.h. Verkleben des Polymers, auf. Die Polymerisation gelingt auch, wenn mit anderen, gemäß Beispiel 4 und Beispiel 5 geträgerten Katalysator- und Cokatalysatorsystemen polymerisiert wird. Die Ergebnisse seien für einige Vertreter erwähnt - Ausbeuten in Klammern.

"$SiO_2$-$(OAlCl_2)_{42}$ x -$(OZrCp_2Cl)_7$" (5,68 g), $SiO_2$-$(OAlCl_2)_{42}$-$(OZrCp_2)H)_7$ (0,46 g), $SiO_2$ (O-Al-Cl)$_{21}$-$(OZrCp_2H)_7$ (1,05 g)

Die Polymerisation gelingt auch in der Abwesenheit von MAO, wenn der geträgerte Al-Cokatalysator durch Reaktion von Methylaluminiumdichlorid oder Dimethylaluminiumchlorid auf der $SiO_2$-ONa-Oberfläche erzeugt wird.

**Beispiel 9**

Umsetzung gemäß Gl. 9

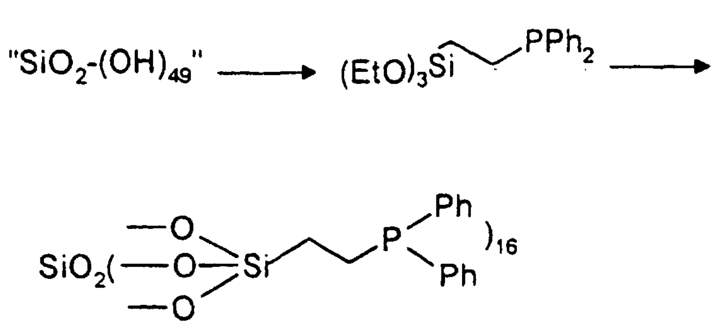

5 g "$SiO_2$-$(OH)_{49}$ werden in 25 ml Tetrahydrofuran, in dem 263 mg (7 x $10^{-4}$ Mol) 2-Diphenyl-phosphino)-ethyltriethoxysilan (Dynamit Nobel) gelost sind, unter Zusatz von 85 mg Trifluoressigsäure eine Stunde bei Zimmertemperatur gerührt. Nach dem Filtrieren und Waschen mit Tetrahydrofuran wird 12 Stunden im Vakuum getrocknet.

Der geträgerte Phosphinligand kann, wie im Beispiel 7 beschrieben, zu getragerten, katalytisch wirksamen Metallkomplexen umgesetzt werden.

Durch analoge Umsetzung von 5 g $SiO_2$-$(OH)_{49}$ in 25 ml Methylenchlorid mit 300 mg (7 x $10^{-4}$Mol)

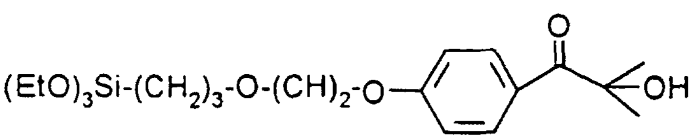

(ZLI-4434, Merck/Novartis)

erhält man einen geträgerten Fotoinitiator zur Polymerisation von Acrylaten.

## Patentansprüche

1. Verfahren zur Herstellung von Trägermaterialien T mit erhöhter Zahl reaktiver Gruppen für Cokatalysatoren, **dadurch gekennzeichnet, daß** man natürliches oder chemisch hergestelltes sauerstoffhaltiges Gel, Oxid oder Salz des Siliziums, Bors, Aluminiums, Titans und des Zirkons als anorganisches Trägermaterial
in einem inerten aprotischen polaren oder inerten aprotischen unpolaren Lösungsmittel, ausgewählt aus der Gruppe Tetrahydrofuran, Methyl-t.butylether, Dimethylformamid, N-Methylpyrrolidon, Tetramethylharnstoff, Hexan, Heptan, Cyclohexan, Methylcyclohexan, Toluol und Xylole, mit einem stark basisch reagierenden Reagenz reagieren lässt,
wodurch OH- oder entsprechende OM-Gruppen, worin M einem Alkalioder Erdalkaliatom entspricht, durch direkte Reaktion erzeugt werden, und dass man gegebenenfalls durch Ansäuern mit einer organischen oder anorganischen Säure OH-Gruppen freisetzt.

2. Verfahren gemäß Anspruch 1 **dadurch gekennzeichnet, dass** man als stark alkalisches Reagenz ein Alkali- oder Erdalkalihydrid, ausgewählt aus der Gruppe NaH, LiH, KH, CsH, $MgH_2$, $CaH_2$ und $BaH_2$, ein Alkalioder Erdalkalioxid aus der Gruppe $Na_2O$, $Li_2O$, $K_2O$, $Cs_2O$, MgO, CaO und BaO oder ein polares Metallorganyl der Alkali- oder Erdalkalimetalle aus der Gruppe der Kohlenwasserstoffe Li-butyl und Li-methyl, oder ein Alkoholat aus der Gruppe Na-methylat und K-t.-butylat, oder ein Alkali- oder Erdalkalihydroxid aus der Gruppe LiOH, NaOH, KOH, CsOH und $Mg(OH)_2$, verwendet.

3. Verfahren gemäß der Ansprüche 1 bis 2, **dadurch gekennzeichnet, dass** durch Ansäuern mit einer organischen oder anorganischen Säure, ausgewählt aus der Gruppe $CH_3SO_3H$, $CF_3SO_3H$, $H_2SO_4$, HF, HCl, HBr, HJ, und $H_3PO_4$, OH-Gruppen freigesetzt werden.

4. Verfahren gemäß einem oder mehreren der Ansprüche 1 bis 3, **dadurch gekennzeichnet, dass** das Trägermaterial nach Freisetzung der neugebildeten OH-Gruppen zur Stabilisierung mit einem Metallhalogenid, einem Metallhydrid oder einer metallorganischen Verbindung umgesetzt wird.

5. Verfahren gemäß der Ansprüche 1 bis 4, **dadurch gekennzeichnet, dass** man zur Herstellung coreaktiver Oberflächen mit teilweise katalytischen bzw. cokatalytischen Eigenschaften auf einem oxidischen Träger T, bei dem es sich um ein natürliches oder chemisch hergestelltes sauerstoffhaltiges Gel, Oxid oder Salz des Siliziums, Bors, Aluminiums, Titans oder des Zirkons handelt,
die durch direkte Reaktion erzeugten OH- oder entsprechenden OM-Gruppen, worin M einem Alkali- oder Erdalkaliatom entspricht, mit coreaktiven Gruppen eines Liganden, Katalysators oder Cokatalysators reagieren läßt.

6. Verfahren gemäß der Ansprüche 1 bis 4 zur Herstellung von Trägermaterialien T mit coreaktiven Oberflächen, **dadurch gekennzeichnet, dass** durch Umsetzung von auf dem oxidischen Träger T befindlichen, bzw. hergestellten O-M Gruppen
mit Metallderivaten aus der Gruppe der Metallhydride, -organyle, und - halogenide einschließlich ihrer gemischt funktionellen Derivate der allgemeinen Formel

$$M'(Z)_p,$$

worin

M' ein Metall der Gruppen 3A, 3B, 4B, 5B oder 6B des Periodensystems der Elemente,
Z H, Hal, Org, Organylsulfonat
Org A, OA, ACOO, NHA, $NA_2$, SA, $ANA_2$, ANHA, AOH, AOA, $(AO)_yAr$, $APA_2$, $APAr_2$, Cycloalkyl mit bis zu 6 C-Atomen, Heterocycloalkyl oder Ar

mit

y 0, 1, 2, 3, 4
A geradkettiger, verzweigter, gesättigter oder ungesättigter Alkylrest mit 1 bis 8 C-Atomen

und

Ar substituiertes oder unsubstituiertes Phenyl, Naphthyl, Pyridyl, Pyrimidinyl, Thiophenyl, oder Furanyl, wobei Substituenten A, OA, CO-AOH, COOH, COOA, Cl, F sein können,
Hal F, Cl, Br, J

und

p maximal mögliche Bindungszahl von M'

bedeuten,
mit der Maßgabe, daß die Metallderivate mindestens eine Fluchtgruppe Y = Hal oder Org = OA oder ACOO enthalten,
coreaktiver Oberflächen mit teilweise katalytischen bzw. cokatalytischen Eigenschaften der allgemeinen Formeln IVa bis IVc ,

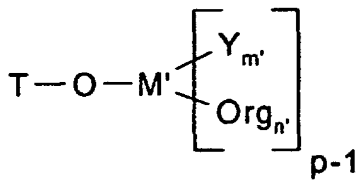
(IVa)

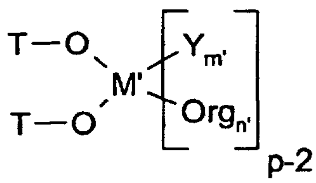
(IVb)

und

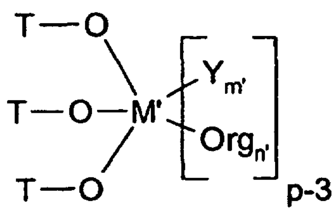
(IVc)

,

mit

m' 0 bis (p-x-n'),
n' 0 bis (p-x-m'),

und

x 1, 2 oder 3

bzw. der allgemeinen Formeln IVd bis IVf,

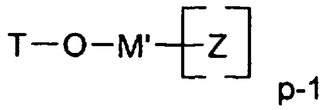

(IVd)

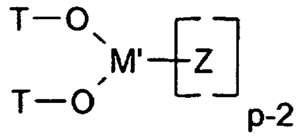

(IVe)

und

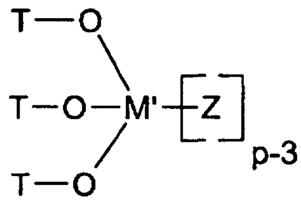

(IVf)

hergestellt werden.

**7.** Verfahren gemäß der Ansprüche 1 bis 6 zur Herstellung von Trägermaterialien T mit coreaktiven Oberflächen, **dadurch gekennzeichnet, dass** durch Umsetzung von auf dem oxidischen Träger T befindlichen, bzw. freigesetzten OH-Gruppen mittels Metallderivaten aus der Gruppe der Metallhydride, -organyle, -halogenide und deren gemischt funktionellen Derivate der allgemeinen Formel

$$M'(Z)_p ,$$

die mindestens einen Hydrid- (Y = H) oder einen Organylrest (Org) besitzen, coreaktiver Oberflächen mit teilweise katalytischen bzw. cokatalytischen Eigenschaften der allgemeinen Formeln IVa bis IVc, bzw. IVd bis IVf, $(T\text{-}O)_mM'\text{-}T_{(p-m)}$ (IV), mit m = 1, 2, 3, hergestellt werden.

**8.** Verfahren gemäß der Ansprüche 1 bis 7, **dadurch gekennzeichnet, dass** als sauerstoffhaltiges, anorganisches Material Wollastonit, Enstatit, Diopsid, Trennolith, Serpentin oder Talk, Kieselgel, sauerstoffhaltige Alkylsiloxane oder natürlich vorkommende Silikate, die sich von ketten-, band-, und schichtförmigen Kieselsäuren ableiten, verwendet wird, in Form von Partikeln mit einer Oberfläche von 1 bis 600 $m^2/g$.

**9.** Verfahren gemäß der Ansprüche 1 - 7, **dadurch gekennzeichnet, dass** als sauerstoffhaltiges anorganisches Material $BaTiO_3$ verwendet wird.

**10.** Verfahren gemäß der Ansprüche 1 - 3, **dadurch gekennzeichnet, dass** man die erzeugten OH- oder entsprechenden OM-Gruppen, worin M einem Alkali- oder Erdalkaliatom entspricht, durch chemisorptiv gebundene coreaktive Gruppen modifiziert, wodurch eine Oberfläche bestehend aus chemisorptiv fixierten, funktionellen organischen Gruppen entsteht.

**11.** Verfahren gemäß Anspruch 10 zur Herstellung von Trägermaterialien T mit coreaktiven Oberflächen, **dadurch gekennzeichnet, dass** ein coreaktives Trägermaterial der allgemeinen Formeln IV,

$$(T\text{-}O)_m\text{-}M'\text{-}Z_{(p-m)} \qquad (IV)$$

bzw. (IVa), (IVb) und (IVc)

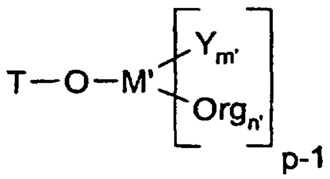

(IVa)

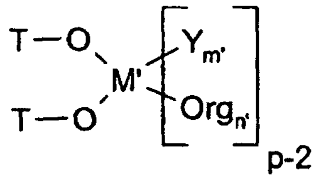

(IVb)

und

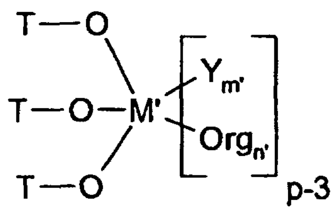

(IVc)

worin

T ein oxidisch gebundenes Element aus der Gruppe Si, B, Al, Ti und Zr, im Kern des Trägermaterials befindlich
M' ein Element ausgewählt aus der Gruppe der Elemente der Gruppen 3A, 3B, 4B, 5B und 6B des Periodensystems der Elemente,
Y H, Hal,;
Hal F, Cl Br, J

mit

m' 0 bis (p-x-n') und
n' 0 bis (p-x-m'), wobei
p maximal mögliche Bindungszahl von M'

und

x 1, 2 oder 3;

und

Org A, OA, ACOO, $NA_2$, SA, $ANA_2$, AOH, AOA, $(AO)_yAr$, $APA_2$, $APAr_2$.
gesättigtes oder ungesättigtes Cycloalkyl mit bis zu 6 C-Atomen, heterocyclischer oder aromatischer Rest Ar

mit

y 0, 1, 2, 3, 4
A geradkettiger, verzweigter, gesättigter oder ungesättigter Alkylrest mit 1 bis 8 C-Atomen und
Ar substituiertes oder unsubstituiertes Phenyl, Naphthyl, Pyridyl, Pyrimidinyl, Thiophenyl, Furanyl, wobei die

Substituenten A, OA, COOA, Cl, F sein können,

bedeuten,
mittels anionischer Nucleophile, Wasserstoff-substituierter Nucleophile, α-olefinischer oder α-acetylenischer Organyle
in andere Derivate der allgemeinen Formeln IVd, IVe und IVf

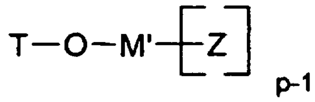

(IVd)

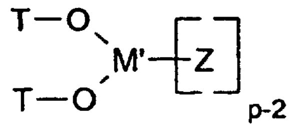

(IVe)

und

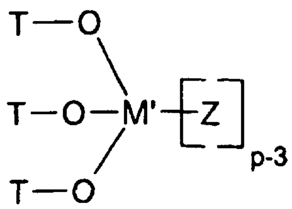

(IVf)

worin

Z Y, Org

bedeutet, transformiert werden.

**12.** Verfahren gemäß Anspruch 11, **dadurch gekennzeichnet, dass** transformierte Derivate der allgemeinen Formeln IVd, IVe und IVf durch Reaktion mit einer nucleophilen Verbindung der allgemeinen Formel

H-Nu,

worin

Nu A, OA, $ACO_2$, NHA, $NA_2$, SA, $ONA_2$, ONHA, O-A-OH, O-A-O-A, (O)m-Ar, $(HN)_m$-Ar, $(NA)_m$-Ar (m=1,2), NH-A-OA, H-A-NHA, NH-A-$NA_2$, NH-A-$NH_2$, A-N-A-$NA_2$, HN-A-$NA_2$, O-A-$P(R)_2$, RN-A-$P(R)_2$, S-A-$P(R)_2$, $R_2P-(CH_2)_j-[C(O)H]_k-C(O)H-(CH_2)_j-P(R)_2$, $R_2N-(CH_2)_j-[C(O)H]_k-C(O)H-(CH_2)_j-N(R)_2$, OH,

mit

R A, O-A, Ar, OAr, H
j 1, 2 oder 3 und
k 0 oder 1

bedeuten und
wobei A und Ar die oben gegebenen Bedeutungen haben,
in Trägermaterialien der allgemeinen Formeln V bzw. Va, Vb oder Vc, nach den folgenden Reaktionsschemen überführt werden:

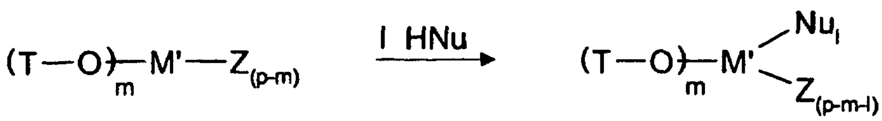


(IV) (V)

mit l ≤ (p - m).

IVd 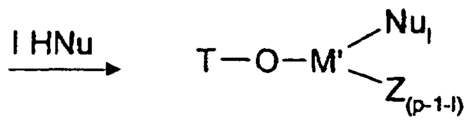

(5e)

Va

mit l = 1 - 3

IVe 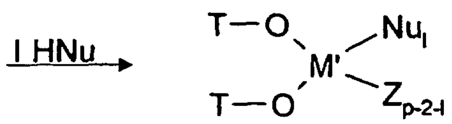

(5f)

Vb

mit l = 1 - 2

und

IVf 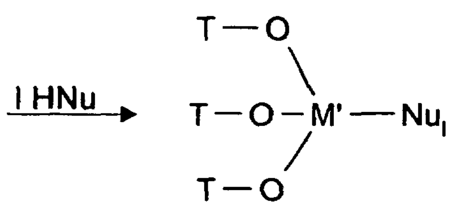

(5g)

Vc

mit l = 1.

**13.** Coreaktives Trägermaterial, hergestellt nach einem Verfahren gemäß einem oder mehreren der Ansprüche 6 bis 9 und 11, 12 **dadurch gekennzeichnet, dass** verschiedene M' mit unterschiedlichen Substituenten auf ein und denselben Träger aufgebracht sind.

**14.** Coreaktives Trägermaterial, Heterogenkatalysator oder Heterogencokatalysator hergestellt nach einem Verfahren gemäß einem oder mehreren der Ansprüche 1 bis 12, **dadurch gekennzeichnet, dass** die Oberfläche eines natürlichen oder chemisch hergestellten sauerstoffhaltigen Gels, Oxids oder Salz des Siliziums, Bors, Aluminiums, Titans und des Zirkons mittels einer geeigneten Aluminiumverbindung und anschließend durch eine organische Zirkoniumverbindung transformiert wird.

15. Heterogenkatalysator oder Heterogencokatalysator, hergestellt nach einem Verfahren gemäß einem oder mehreren der Ansprüche 11 und 12.

16. Coreaktives Trägermaterial, Heterogenkatalysator oder Heterogencokatalysator gemäß der Ansprüche 13 und 15 mit durch metallorganische Verbindungen derivatisierte Oberflächenstrukturen der allgemeinen Formeln IV, bzw. (IVa) - (IVf).

17. Verwendung eines coreaktiven Trägermaterials, Heterogenkatalysators oder Heterogencokatalysators gemäß der Ansprüche 11 - 16 für die Olefinpolymerisation von Ethylen, Propylen, Hexen, oder Styrol.

18. Verwendung der nach einem Verfahren gemäß der Ansprüche 1 bis 12 vorbehandelten Trägermaterialien zur Herstellung von Katalysatoren für Metathese-, Hydrier, Kopplungs-, Oxidations- oder Hydroformylierungsreaktionen.

## Claims

1. Process for preparing support materials T having an increased number of reactive groups for cocatalysts, **characterized in that** a natural or chemically produced oxygen-containing gel, oxide or salt of silicon, boron, aluminium, titanium or zirconium as inorganic support material
is reacted in an inert aprotic polar or inert aprotic nonpolar solvent selected from the group consisting of tetrahydrofuran, methyl t-butyl ether, dimethylformamide, N-methylpyrrolidone, tetramethylurea, hexane, heptane, cyclohexane, methylcyclohexane, toluene and xylenes
with a strongly basic reagent to produce OH or corresponding OM groups, where M is an alkali metal or alkaline earth metal atom, by direct reaction and **in that**, if desired, OH groups are set free by acidification with an organic or inorganic acid.

2. Process according to Claim 1, **characterized in that** the strongly alkaline reagent used is an alkali metal hydride or alkaline earth metal hydride selected from the group consisting of NaH, LiH, KH, CsH, $MgH_2$, $CaH_2$ and $BaH_2$, an alkali metal oxide or alkaline earth metal oxide selected from the group consisting of $Na_2O$, $Li_2O$, $K_2O$, $Cs_2O$, MgO, CaO and BaO or a polar organometallic hydrocarbon compound of the alkali and alkaline earth metals selected from the group consisting of butyllithium and methyllithium, or an alkoxide selected from the group consisting of sodium methoxide and potassium t-butoxide, or an alkali metal hydroxide or alkaline earth metal hydroxide selected from the group consisting of LiOH, NaOH, KOH, CsOH and $Mg(OH)_2$.

3. Process according to Claims 1 and 2, **characterized in that** OH groups are set free by acidification with an organic or inorganic acid selected from the group consisting of $CH_3SO_3H$, $CF_3SO_3H$, $H_2SO_4$, HF, HCl, HBr, HI and $H_3PO_4$.

4. Process according to one or more of Claims 1 to 3, **characterized in that** the support material is, after setting free the newly formed OH groups, stabilized by reaction with a metal halide, a metal hydride or an organometallic compound.

5. Process according to any of Claims 1 to 4, **characterized in that** coreactive surfaces which may have catalytic or cocatalytic properties on an oxidic support T which is a natural or chemically produced oxygen-containing gel, oxide or salt of silicon, boron, aluminium, titanium or zirconium, are prepared by allowing the OH or corresponding OM groups, where M is an alkali metal or alkaline earth metal atom, produced by direct reaction to react with coreactive groups of a ligand, catalyst or cocatalyst.

6. Process according to any of Claims 1 to 4 for preparing support materials T having coreactive surfaces, **characterized in that** coreactive surfaces which may have catalytic or cocatalytic properties and have the formulae IVa to IVc,

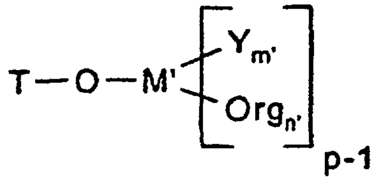

(IVa)

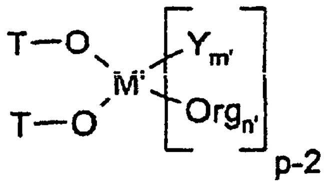

(IVb)

and

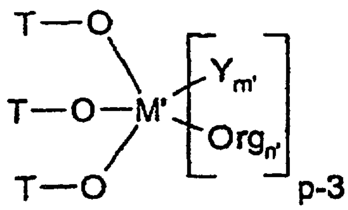

(IVc)

,

where

m' is from 0 to (p-x-n'),
n' is from 0 to (p-x-m'),

and

x is 1, 2 or 3

or the formulae IVd to IVf,

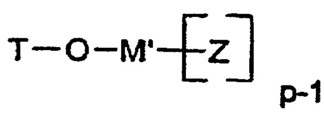

(IVd)

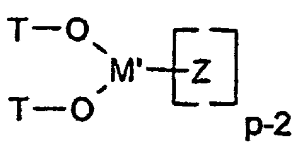

(IVe)

and

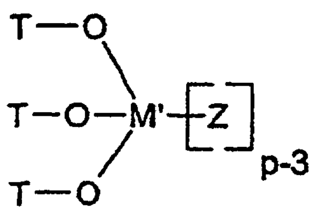

(IVf)

are prepared by reaction of OM groups located or generated on the oxidic support T with metal derivatives selected from the group consisting of metal hydrides, organometallic compounds and metal halides including their mixed functional derivatives of the formula

$$M'(Z)_p$$

in which

M' is a metal of group 3A, 3B, 4B, 5B or 6B of the Periodic Table of the Elements,
Z is H, Hal, Org, organylsulphonate,
Org is A, OA, ACOO, NHA, $NA_2$, SA, $ANA_2$, ANHA, AOH, AOA, $(AO)_yAr$, $APA_2$, $APAr_2$, cycloalkyl having up to 6 carbon atoms, heterocycloalkyl or Ar

where

y is 0, 1, 2, 3, 4,
A is a straight-chain, branched, saturated or unsaturated alkyl radical having from 1 to 8 carbon atoms

and

Ar is substituted or unsubstituted phenyl, naphthyl, pyridyl, pyrimidinyl, thienyl or furanyl, where substituents may be A, OA, CO-AOH, COOH, COOA, Cl, F,
Hal is F, Cl, Br, I

and

p is the maximum possible valency of M',

with the proviso that the metal derivatives contain at least one leaving group Y = Hal or Org = OA or ACOO.

**7.** Process according to any of Claims 1 to 6 for preparing support materials T having coreactive surfaces, **characterized in that** coreactive surfaces which may have catalytic or cocatalytic properties and have the formulae IVa to IVc or IVd to IVf, $(T\text{-}O)_mM'\text{-}T_{(p\text{-}m)}$ (IV), where m = 1, 2, 3, are prepared by reaction of OH groups located or set free on the oxidic support T with metal derivatives from the group consisting of metal hydrides, organometallic compounds, metal halides and their mixed functional derivatives of the formula

$$M'\ (Z)_p$$

which have at least one hydride (Y = H) or organyl radical (Org).

**8.** Process according to any of Claims 1 to 7, **characterized in that** the oxygen-containing, inorganic material used is wollastonite, enstatite, diopside, trennolite, serpentine or talc, silica gel, an oxygen-containing alkylsiloxane or a naturally occurring silicate derived from a silicic acid having a chain, band, or sheet structure in the form of particles having a surface area of from 1 to 600 $m^2/g$.

**9.** Process according to any of Claims 1-7, **characterized in that** the oxygen-containing inorganic material used is $BaTiO_3$.

**10.** Process according to any of Claims 1-3, **characterized in that** the OH or corresponding OM groups, where M is an alkali metal or alkaline earth metal atom, produced are modified by chemisorptively bound coreactive groups to form a surface comprising chemisorptively fixed, functional organic groups.

**11.** Process according to Claim 10 for preparing support materials T having coreactive surfaces, **characterized in that** a coreactive support material of the formulae IV,

$$(T\text{-}O)_m\text{-}M'\text{-}Z_{(p-m)} \qquad (IV)$$

or (IVa), (IVb) and (IVc)

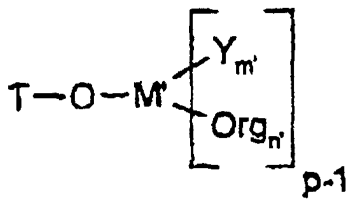

(IVa)

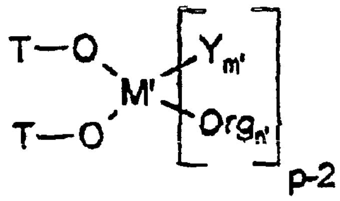

(IVb)

and

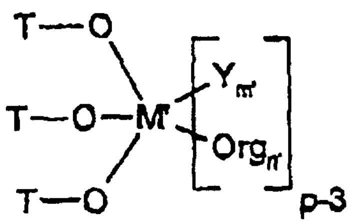

(IVc)

where

T is an oxidically bound element selected from the group consisting of Si, B, Al, Ti and Zr, located in the core of the support material,
M' is an element selected from the group consisting of elements of groups 3A, 3B, 4B, 5B and 6B of the Periodic Table of the Elements,
Y is H, Hal,
Hal is F, Cl, Br, I,

and

m' is from 0 to (p-x-n') and
n' is from 0 to (p-x-m'), where
p is the maximum possible valency of M' and
x = 1, 2 or 3;

and

Org is A, OA, ACOO, $NA_2$, SA, $ANA_2$, AOH, AOA, $(AO)_yAr$, $APA_2$, $APAr_2$, saturated or unsaturated cycloalkyl having up to 6 carbon atoms, heterocyclic or aromatic radical Ar,

where

y is 0, 1, 2, 3, 4,
A is a straight-chain, branched, saturated or unsaturated alkyl radical having from 1 to 8 carbon atoms and
Ar is substituted or unsubstituted phenyl, naphthyl, pyridyl, pyrimidinyl, thienyl, furanyl, where the substituents can be A, OA, COOA, Cl, F,

is converted by means of anionic nucleophiles, hydrogen-substituted nucleophiles, α-olefinic or α-acetylenic organic compounds
into other derivatives of the formulae IVd, Ive and IVf

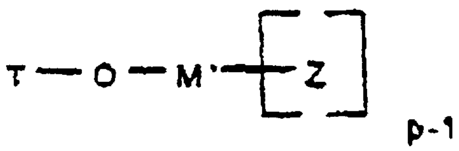

(IVd)

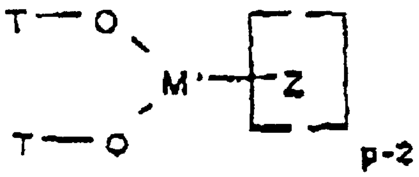

(IVe)

and

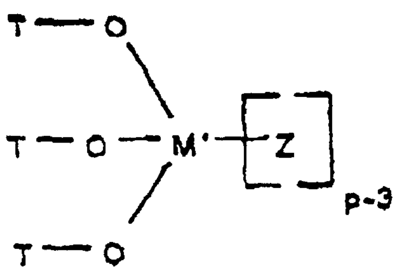

(IVf)

where

Z is Y, Org.

**12.** Process according to Claim 11, **characterized in that** transformed derivatives of the formulae IVd, IVe and IVf are converted by reaction with a nucleophilic compound of the formula

H-Nu

where

Nu is A, OA, $ACO_2$, NHA, $NA_2$, SA, $ONA_2$, ONHA, O-A-OH, O-A-O-A, (O)m-Ar, $(HN)_m$-Ar, $(NA)_m$-Ar (m=1,2), NH-A-OA, NH-A-NHA, NH-A-$NA_2$, NH-A-$NH_2$, A-N-A-$NA_2$, HN-A-$NA_2$, O-A-$P(R)_2$, RN-A-$P(R)_2$, S-A-$P(R)_2$,

$R_2P-(CH_2)_j-[C(O)H]_k-C(O)H-(CH_2)_j-P(R)_2$, $R_2N-(CH_2)_j-[C(O)H]_k-C(O)H-(CH_2)_j-N(R)_2$, OH,

where

- R is A, O-A, aryl, O-aryl, H,
- j is 1, 2 or 3 and
- k is 0 or 1, and

where A and Ar are as defined above, into support materials of the formulae V or Va, Vb or Vc according to the following reaction schemes:

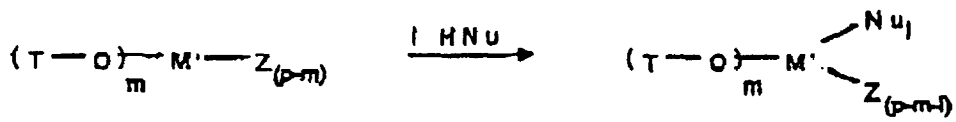


(IV) (V)

where l ≤ (p-m)

IVd 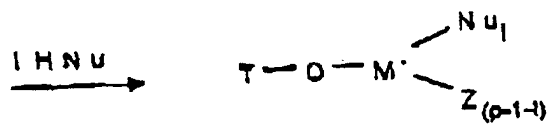


(5e)

Va

where l = 1-3

IVe 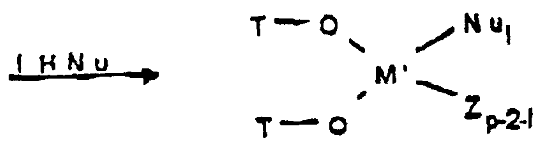


(5f)

Vb

where l = 1-2
and

IVf 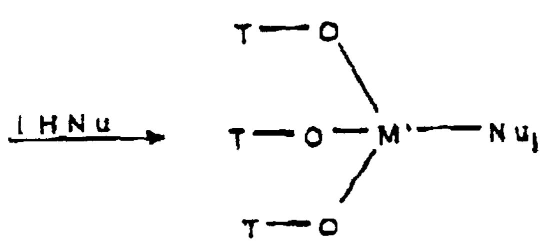


(5g)

Vc

where I = 1.

**13.** Coreactive support material prepared by a process according to one or more of Claims 6 to 9 and 11, 12, **characterized in that** various M' having different substituents are applied to one and the same support.

**14.** Coreactive support material, heterogeneous catalyst or heterogeneous cocatalyst prepared by a process according to one or more of Claims 1 to 12, **characterized in that** the surface of a natural or chemically produced oxygen-containing gel, oxide or salt of silicon, boron, aluminium, titanium or zirconium is transformed by means of a suitable aluminium compound and subsequently by means of an organic zirconium compound.

**15.** Heterogeneous catalyst or heterogeneous cocatalyst prepared by a process according to one or more of Claims 11 and 12.

**16.** Coreactive support material, heterogeneous catalyst or heterogeneous cocatalyst according to Claims 13 and 15 having surface structures modified by means of organometallic compounds and having the formulae IV or (IVa) - (IVf).

**17.** Use of a coreactive support material, heterogeneous catalyst or heterogeneous cocatalyst according to any of Claims 11-16 for the polymerization of ethylene, propylene, hexene or styrene.

**18.** Use of the support materials pretreated by a process according to any of Claims 1 to 12 for preparing catalysts for metathesis, hydrogenation, coupling, oxidation or hydroformylation reactions.

## Revendications

**1.** Procédé de fabrication de matériaux supports T avec un nombre accru de groupes réactifs pour des co-catalyseurs, **caractérisé en ce que** l'on fait réagir un gel, de l'oxyde ou un sel contenant de l'oxygène, naturel ou fabriqué chimiquement, de silicium, de bore, d'aluminium, de titane ou de zirconium comme matériau support inorganique

dans un solvant inerte aprotique polaire ou inerte aprotique non polaire, choisi dans le groupe du tétrahydrofuranne, de l'éther méthylique-tertiobutylique, du diméthylformamide, de la N-méthylpyrrolidone, de la tétraméthylurée, de l'hexane, de l'heptane, du cyclohexane, du méthylcyclohexane, du toluène ou des xylènes avec un réactif à réaction fortement basique, moyennant quoi des groupes OH ou des groupes OM correspondants, dans lesquels M correspond à un atome alcalin ou alcalino-terreux, sont produits par réaction directe, et **en ce qu'**on libère le cas échéant des groupes OH par acidification avec un acide organique ou minéral.

**2.** Procédé selon la revendication 1, **caractérisé en ce que** l'on utilise comme réactif fortement basique un hydrure de métal alcalin ou alcalino-terreux, choisi dans le groupe NaH, LiH, KH, CsH, $MgH_2$, $CaH_2$ et $BaH_2$, un oxyde de métal alcalin ou alcalino-terreux choisi dans le groupe $Na_2O$, $Li_2O$, $K_2O$, $Cs_2O$, MgO, CaO et BaO, ou un composé organométallique polaire de métal alcalin ou alcalino-terreux du groupe des hydrocarbures Li-butyle et Li-méthyle, ou un alcoolate du groupe du méthylate de Na et du t.-butylate de K, ou un hydroxyde de métal alcalin ou alcalino-terreux du groupe LiOH, NaOH, KOH, CsOH et $Mg(OH)_2$.

**3.** Procédé selon les revendications 1 à 2, **caractérisé en ce que** des groupes OH sont libérés par l'acidification avec un acide organique ou minéral, choisi parmi le groupe $CH_3SO_3H$, $CF_3SO_3H$, $H_2SO4$, HF, HCl, HBr, HI et $H_3PO_4$.

**4.** Procédé selon une ou plusieurs des revendications 1 à 3, **caractérisé en ce qu'**après la libération des groupes OH nouvellement formés, le matériau support est mis en réaction pour stabilisation avec un halogénure métallique, un hydrure métallique ou un composé organométallique.

**5.** Procédé selon les revendications 1 à 4, **caractérisé en ce que**, pour la fabrication de surfaces co-réactives avec des propriétés partiellement catalytiques, respectivement co-catalytiques, on fait réagir sur un support d'oxyde T, pour lequel il s'agit d'un gel, d'un oxyde ou d'un sel contenant de l'oxygène, naturel ou fabriqué chimiquement, de silicium, de bore, d'aluminium, de titane ou de zirconium,

les OH ou les OM correspondants produits par réaction directe, dans lesquels M correspond à un atome de métal alcalin ou alcalino-terreux, avec des groupes co-réactifs d'un ligand, d'un catalyseur ou d'un co-catalyseur.

**6.** Procédé de fabrication de matériaux supports T à surfaces co-réactives selon les revendications 1 à 4, **caractérisé en ce que**, par réaction de groupes O-M se trouvant, respectivement produits sur le support à nature d'oxyde T avec des dérivés métalliques du groupe des hydrures et des halogénures métalliques et des composés organométalliques, y compris leurs dérivés fonctionnellement mixtes de la formule générale

$$M'(Z)_p,$$

où

M' signifie un métal des groupes 3A, 3B, 4B, 5B ou 6B du système périodique des éléments,

Z signifie H, Hal, Org, organylsulfonate

Org signifie A, OA, ACOO, NHA, $NA_2$, SA, $ANA_2$, ANHA, AOH, AOA, (AO)yAr, $APA_2$, $APAr_2$, un cycloalkyle avec jusqu'à 6 atomes de C, un hétérocycloalkyle ou un Ar

avec

y est 0, 1, 2, 3, 4

A représente un radical alkyle linéaire, ramifié, saturé ou insaturé avec 1 à 8 atomes de C

et

Ar représente un phényle, un naphtyle, un pyridyle, un pyrimidyle, un thiophényle ou un furanyle substitué ou non substitué, sachant que les substituants peuvent être A, OA, CO-AOH, COOH, COOA, Cl, F,

Hal représente F, Cl, Br, I

et

p représente l'indice de liaison maximal de M',

avec la condition que les dérivés métalliques contiennent au moins un groupe partant Y = Hal ou Org = OA ou ACOO,

des surfaces co-réactive à propriétés partiellement catalytiques, respectivement co-catalytiques des formules générales IVa à Ivc

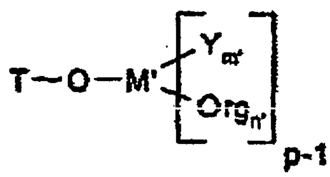

(IVa)

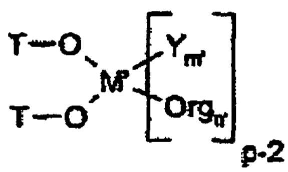

(IVb)

et

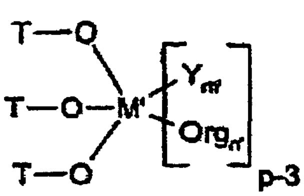

(IVc)

avec

m' 0 à (p - x - n')

n' 0 à (p - x - m')

et

x 1, 2 ou 3
respectivement des formules générales IVd à Ivf

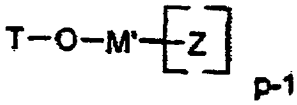

(IVd)

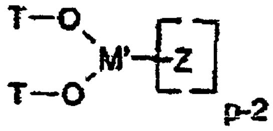

(IVe)

et

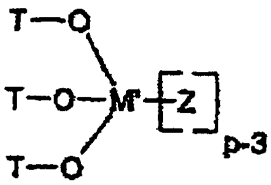

(IVf)

sont fabriquées.

**7.** Procédé de fabrication de matériaux supports T à surfaces co-réactives selon les revendications 1 à 6, **caractérisé en ce que**, par réaction des groupes OH se trouvant sur le support à base d'oxyde T, respectivement libérés au moyen de dérivés métalliques du groupe des hydrures métalliques, des halogénures métalliques, des composés organométalliques et de leurs dérivés fonctionnellement mixtes de la formule générale

$$M'(Z)_p$$

qui possèdent au moins un radical hydrure (Y = H) ou organyle (Org), des surfaces co-réactive à propriétés partiellement catalytiques, respectivement co-catalytiques de formules générales IVa à IVc, respectivement IVd à IVf, $(T\text{-}O)_mM'\text{-}T_{(p-m)}$(IV), avec m = 1, 2, 3 sont fabriquées.

**8.** Procédé selon les revendications 1 à 7, **caractérisé en ce que**, comme matériau inorganique contenant de l'oxygène, on utilise de la wollastonite, de l'enstatite, du diopside, de la trennolithe, de la serpentine ou du talc, du gel de silice, des alkylsiloxanes contenant de l'oxygène ou des silicates naturels issus d'acides siliciques en forme de chaînes, de bandes et de couches, sous la forme de particules d'une surface de 1 à 600 $m^2$/g.

**9.** Procédé selon les revendications 1 à 7, **caractérisé en ce que** l'on utilise $BaTiO_3$ comme matériau inorganique contenant de l'oxygène.

**10.** Procédé selon les revendications 1 à 3, **caractérisé en ce que** l'on modifie les groupes OH ou OM correspondants, dans lesquels M correspond à un atome de métal alcalin ou alcalino-terreux, par des groupes co-réactifs liés par chimisorption, moyennant quoi il s'ensuit une surface consistant en des groupes organiques fonctionnels fixés par chimisorption.

**11.** Procédé de fabrication de matériaux supports T à surfaces co-réactives selon la revendication 10, **caractérisé en ce qu'**un matériau support co-réactif de la formule générale IV,

$$(T\text{-}O)_m\text{-}M'\text{-}Z_{(p\text{-}m)} \quad (IV)$$

respectivement (IVa), (IVb) et (IVc)

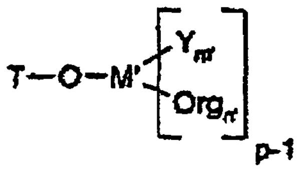

**(IVa)**

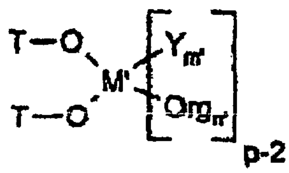

**(IVb)**

et

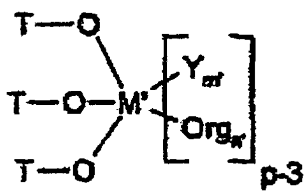

**(IVc)**

dans lesquelles

T signifie un élément, lié par un atome d'oxygène, du groupe Si, B, Al, Ti et Zr se trouvant dans le coeur du matériau support

M' signifie un élément choisi dans le groupe des éléments des groupes 3A, 3B, 4B, 5B et 6B de la classification périodique des éléments,

Y signifie H, Hal, ;

Hal signifie F, Cl, Br, I

avec

m' 0 à (p-x-n')et

n' 0 à (p-x-m') où

p indice de liaison maximal possible de M'

et

x 1, 2 ou 3

et

Org signifie A, OA, ACOO, $NA_2$, SA, $ANA_2$, AOH, AOA, $(AO)_y$Ar, $APA_2$, $APAr_2$

un cycloalkyle saturé ou insaturé avec jusqu'à 6 atomes de C, un radical hétérocyclique ou aromatique Ar avec

y 0, 1, 2, 3, 4

A signifie un radical alkyle linéaire, ramifié, saturé ou insaturé avec 1 à 8 atomes de C et

Ar signifie un phényle, un naphtyle, un pyridyle, un pyrimidinyle, un thiophényle, un furanyle substitué ou non substitué, sachant que les substituants peuvent être A, OA, COOA, Cl, F,

est transformé au moyen de nucléophiles anioniques, de nucléophiles substitués par des atomes d'hydrogène, d'organyles α-oléfiniques ou α-acétyléniques

en d'autres dérivés des formules générales IVd, IVe et IVf

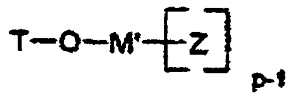

(IVd)

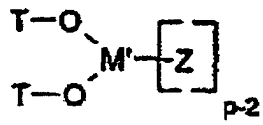

(IVe)

et

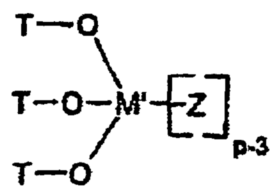

(IVf)

dans lesquelles
Z signifie Y, Org.

**12.** Procédé selon la revendication 11, **caractérisé en ce que** les dérivés transformés de formules générales IVd, IVe et IVf sont transformés par une réaction avec un composé nucléophile de la formule générale

H-Nu

dans laquelle
Nu signifie A, OA, $ACO_2$, NHA, $NA_2$, SA, $ONA_2$, ONHA, O-A-OH, O-A-O-A, $(O)_m$-Ar, $(HN)_m$-Ar, $(NA)_m$-Ar (m=1, 2), NH-A-OA, H-A-NHA, NH-A-$NA_2$, NH-A-$NH_2$, A-N-A-$NA_2$, HN-A-$NA_2$, O-A-$P(R)_2$, RN-A-$P(R)_2$, S-A-$P(R)_2$, $R_2P-(CH_2)_j-[C(O)H]_k-C(O)H-(CH_2)_j-P(R)_2$, $R_2N-(CH_2)_j-[C(O)H]_k-C(O)H-(CH_2)_j-N(R)_2$, OH
avec
R signifie A, O-A, Ar, OAr, H
j 1, 2 ou 3 et
k 0 ou 1
et
sachant que A et Ar ont la signification spécifiée ci-dessus,
en matériaux supports de formules générales V, respectivement Va, Vb ou Vc d'après les schémas de réaction suivants :

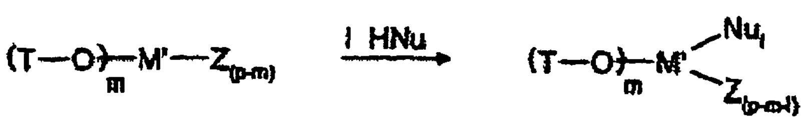


(IV) (V)

avec i ≤ (p-m)

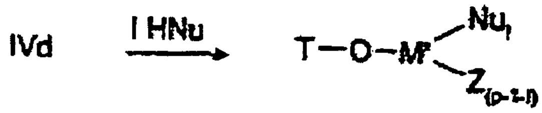


(5e)

Va

avec l = 1 - 3

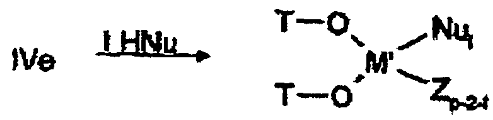


(5f)

Vb

avec l = 1 - 2
et

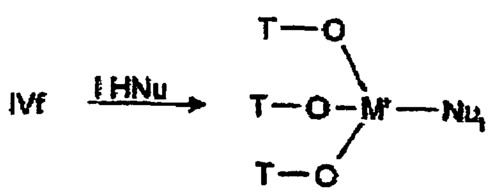


(5g)

Vc

avec 1 = 1

**13.** Matériau support co-réactif, fabriqué selon un procédé d'après une ou plusieurs des revendications 6 à 9 et 11, 12, **caractérisé en ce que** différents M' avec différents substituants sont déposés sur un et le même support.

**14.** Matériau support co-réactif, catalyseur hétérogène ou co-catalyseur hétérogène fabriqué selon un procédé d'après une ou plusieurs des revendications 1 à 12, **caractérisé en ce que** la surface d'un gel, d'un oxyde ou d'un sel, naturel ou fabriqué chimiquement, de silicium, de bore, d'aluminium, de titane et de zirconium, est transformée au moyen d'un composé approprié de l'aluminium, et ensuite par un composé organique du zirconium.

**15.** Catalyseur hétérogène ou co-catalyseur hétérogène, fabriqué selon un procédé d'après une ou plusieurs des revendications 11 ou 12.

**16.** Matériau support co-réactif, catalyseur hétérogène ou co-catalyseur hétérogène d'après les revendications 13 et 15, avec des structures de surface des formules générales IV, respectivement (IVa) à (IVf) obtenues par dérivation avec des composés organométalliques.

**17.** Utilisation d'un matériau support co-réactif, d'un catalyseur hétérogène ou d'un co-catalyseur hétérogène d'après les revendications 11 à 16 pour la polymérisation d'oléfines, en l'occurrence d'éthylène, de propylène, d'hexène ou de styrène.

**18.** Utilisation des matériaux supports prétraités selon un procédé d'après les revendications 1 à 12 pour la fabrication de catalyseurs pour des réactions de métathèse, d'hydruration, de couplage, d'oxydation ou d'hydroformylation.